# EUROPEAN PATENT APPLICATION

(11) **EP 1 408 431 A1**
(43) Date of publication of application: **14.04.2004**
(21) Application number: 01948012.8
(22) Date of filing: 13.07.2001
(51) Int. Cl.: G06F 17/60

(54) **FORWARDING SYSTEM AND FORWARDING METHOD**

(71) Applicant: Sato, Hironori, c/o Mr. Onodera, Higashimurayama-shi, Tokyo 189-0025 (JP)
(72) Inventor: Sato, Hironori, c/o Mr. Onodera, Higashimurayama-shi, Tokyo 189-0025 (JP)
(74) Representative: Manitz, Finsterwald & Partner GbR
(86) International application number: PCT/JP2001/006100
(87) International publication number: WO 2003/009193

(57) **Abstract**

There is provided a storage medium wherein a transfer processing system, a transfer processing method and a program readable by a computer for executing the transfer processing method are stored, the transfer processing system and the transfer processing method being capable of transferring a mail matter or a home delivery parcel by using transfer destination information even when delivery destination information is changed by moving away, career change, office relocation or the like performed by an individual person or an enterprise, thereby reducing a time period and a cost required for transfer processing together with providing the information to a person without knowing a transfer destination address.

The storage medium wherein the transfer processing system, the transfer processing method and the program readable by a computer for executing the transfer processing method are stored is used, the transfer processing system comprising a computer means for retaining entered changed information and entered new registration information which selects a transfer destination in relation to the delivery destination information retained in the computer means, the computer means comprising the steps of: storing the delivery destination information; searching delivery destination information to be changed from the stored delivery destination information; registering the searched delivery destination information entered after having been changed into the changed information as the searched delivery destination information; and newly registering the new registration information as the delivery destination information.

## Description

### Technical Field

The present invention relates to a system and a method for registering information before having been changed or newly registered together with transfer destination information to collate the information before having been changed or newly registered written as an addressee name on a mail matter or a home delivery parcel from a sender with the registered information and then transfer the mail matter or the home delivery parcel by using the transfer destination information. The present invention further relates to a storage medium wherein a program readable by a computer for executing the above-described method is stored.

### Background Art

Today, in order to identify an individual person, information such as a name, an address, a telephone number, an e-mail address, an enterprise name, a division, a position in a company and the like are used to identify an individual person, and progressed telecommunication technologies offer more opportunities of providing and being benefited from the information. However, the above-described information for identifying an individual person contains a surname which may be changed by marriage, an address and a telephone number which may be changed by moving away, an e-mail address which may be changed by a change of a contractant company, or an enterprise name, a division name, and a position in a company which may be changed by career change, transfer to another division or the like. The opportunities of providing and being benefited from the information are often lost by such changes. However, when an individual person attempts to make these changes in order to keep providing and being benefited from the information, a large amount of work and cost have hitherto been required. When, for example, a destination is changed by moving away, a person without knowing the change requests for mailing or delivery of a mail matter or a home delivery parcel to a previous address resulting in a failure of delivery to an addressee name. Instead, the mail matter or the home delivery parcel is often returned to a sender because of the incorrect address. Consequently, a closely related person often becomes estranged because his/her moving destination is not known.

Upon consideration of such a case, there are required a service which keeps providing the same telephone number even when a cellular phone is changed, a service which keeps providing the same e-mail address even when a contractant company is changed, or a service which always delivers a mail matter or a home delivery parcel correctly even when an individual person moves away or a company relocates an office thereof.

On the other hand, although the above-described inconveniences can be improved by an individual person or an enterprise owing the same telephone number or the same e-mail address or an address for exclusive use, infrastructures for exchanging data between communication companies or transportation companies, data transfer and the like have not yet been sufficiently arranged making it difficult to solve the problems.

Thus, immediate realization of the services is required considering recent frequencies of moving away, transfer to another division, office relocation, and career change; a time period and a cost required transfer processing by a mail office; and a loss of opportunity of obtaining information by an individual person. Further, a cost required for investigating a new address and a time required for delivering a mail matter or a home delivery parcel to the new address in such a case where a destination address is incorrect can be reduced, and a mail office or a transportation company can apply cost merits, yielded by a surplus time and a surplus cost resulted by the cost reduction, to provide higher quality services.

### Disclosure of the Invention

The present invention is made in the above-described point of view and an object thereof is to provide a transfer processing system and a transfer processing method capable of transferring a mail matter or a home delivery parcel, even when the information is changed by an individual person or an enterprise by moving away, career change or office relocation, by using the transfer destination information thereby reducing a time period and a cost required transfer processing and providing the information to a person without knowing a moving destination address. Another object of the present invention is to provide a storage medium wherein a program readable by a computer for executing the above-described method.

The objects of the present invention can be attained by providing the transfer processing system, the transfer processing method, and the storage medium wherein the program readable by a computer for executing the transfer processing method according to the present invention.

That is, according to claim 1 of the present invention, there is provided the transfer processing system comprising a computer means for retaining delivery destination information, entered changed information and new registration information, and a means for selecting a transfer destination in relation to delivery destination information retained in the computer means,
the computer means comprising the steps of:
storing the delivery destination information;
searching delivery destination information to be changed from the stored delivery destination information;
registering the changed information of the delivery destination information, which has been entered after having been searched and changed, as the searched delivery destination information; and
newly registering the new registration information as the delivery destination information.

According to claim 2 of the present invention, there is provided the transfer processing system, wherein the computer means further comprises the steps of:
collating information obtained from a reading means for reading the delivery destination information from a sender with the retained delivery destination information; and
selecting a transfer destination in relation to the retained delivery destination information.

According to claim 3 of the present invention, there is provided the transfer processing system, wherein the delivery destination information contains an addressee name and an address.

According to claim 4 of the present invention, there is provided the transfer processing system, wherein the reading means reads the obtained information from a barcode.

According to claim 5 of the present invention, there is provided the transfer processing system, wherein the computer means is connected to the network, and the changed information or the new registration information is received from an input means connected to the network.

According to claim 6 of the present invention, there is provided the transfer processing system, wherein the computer means is connected to the network and the changed information or the new registration information is received from an input means connected to the network.

According to claim 7 of the present invention, there is provided the transfer processing system, wherein the collation means provides the delivery destination of a distribution matter as an output of the collation means to a manager of the mail matter or the parcel distributed from a sender.

According to claim 8 of the present invention, there is provided the transfer processing system, wherein the means for selecting a transfer destination outputs information about a selected transfer destination as a barcode.

According to claim 9 of the present invention, there is provided the transfer processing system comprising a terminal means, the terminal means comprising the reading means, the collation means and the means for selecting a transfer destination.

According to claim 10 of the present invention, there is provided the transfer processing system, wherein the terminal means contains at least the delivery destination information changeable according to the changed information.

According to claim 11 of the present invention, there is provided the transfer processing, wherein the computer means comprises the steps of:
collating the delivery destination information contained in the terminal means with the changed information;
judging whether the changed information matches the delivery destination information contained in the terminal means;
when the changed information matches the delivery destination information contained in the terminal means, comparing the delivery destination information contained in the terminal means with the changed information and then registering the changed information into the terminal means; and
when the changed information does not match the delivery destination information contained in the terminal means, registering the changed information as delivery destination information contained in the terminal means into the terminal means.

According to claim 12 of the present invention, there is provided the transfer processing method comprising the computer means for retaining delivery destination information, entered changed information and new registration information, the transfer processing method selecting a transfer destination in relation to the delivery destination information retained in the computer means. The transfer processing method comprising the steps of:
storing the delivery destination information;
searching information about a delivery destination to be changed from the stored delivery destination information;
registering the changed information of the delivery destination information, which has been entered after having been searched and changed, as the searched delivery destination information;
newly registering the entered changed information as the delivery destination information;
collating information obtained from a reading means for reading delivery destination information from a sender with the retained delivery destination information; and
selecting a transfer destination in relation to the delivery destination information retained by the collation step.

According to claim 13 of the present invention, there is provided the transfer processing method, wherein the delivery destination information contains an addressee name and an address.

According to claim 14 of the present invention, there is provided the transfer processing method, wherein the reading means reads the obtained information from a barcode.

According to claim 15 of the present invention, there is provided the transfer processing method comprising the step of receiving the obtained information by using the computer means via a network.

According to claim 16 of the present invention, there is provided the transfer processing method comprising the step of receiving the changed information or the new registration information from an input means connected to the network.

According to claim 17 of the present invention, there is provided the transfer processing method comprising the collation step of providing the delivery destination of the distribution matter as an output of the collation means to the manager of the distributed mail matter from the sender.

According to claim 18 of the present invention, there is provided the transfer processing method comprising the step of providing the delivery destination of the distribution matter as an output of the collation means to the manager of the distribution matter from the sender.

According to claim 19 of the present invention, there is provided the transfer processing system comprising the step of outputting the transfer destination information selected by the selection step as a barcode.

According to claim 20 of the present invention, there is provided the transfer processing method comprising the collation step and the selection step executed by the terminal means, the transfer processing method further comprising the steps of:
collating the delivery destination information contained in the terminal means with
the changed information;
judging whether the changed information matches the delivery destination information contained in the terminal means;
when the changed information relates to the delivery destination information contained in the terminal means, comparing the delivery destination information contained in the terminal means with the changed information and then registering
the changed information to the terminal means; and
when the changed information does not match the delivery destination information contained in the terminal means, registering the changed information as the delivery destination information contained in the terminal means into the terminal means.

According to claim 21 of the present invention, there is provided a storage medium wherein a program readable by a computer comprising a computer means for retaining delivery destination information, entered changed information and new registration information, the program executing a transfer processing method for selecting a transfer destination in relation to the delivery destination information retained in the computer means. The program further comprising the steps of:
storing the delivery destination information;
searching delivery destination information to be changed from the stored delivery destination information;
registering the changed information of the delivery destination information, which has been entered after having been searched and changed, as the searched delivery destination information;
newly registering the new registration information as the delivery destination information;
collating information obtained from a reading means for reading delivery destination information from a sender with the retained delivery destination information; and
selecting a transfer destination in relation to the retained delivery destination information by the collation step.

According to claim 22 of the present invention, there is provided the storage medium, wherein the delivery destination information contains an addressee name and an address.

According to claim 23 of the present invention, there is provided the storage medium, wherein the reading means reads the obtained information from a barcode.

According to claim 24 of the present invention, there is provided the storage medium making a computer execute the step of receiving the obtained information received by the computer means via a network.

According to claim 25 of the present invention, there is provided the storage medium making a computer execute the step of receiving the changed information or the new registration information from the input means connected to the network.

According to claim 26 of the present invention, there is provided the storage medium for making a computer execute the step of providing the delivery destination of the distribution matter as an output of the collation means to the manager of the distribution matter from the sender.

According to claim 27 of the present invention, there is provided the storage medium further making a computer execute the step of providing the delivery destination of the distribution matter as an output of the collation means to the manager of the distribution matter from the sender.

According to claim 28 of the present invention, there is provided the storage medium making a computer execute the step of outputting the information about the transfer destination selected by the selection step as a barcode.

According to claim 29 of the present invention, there is provided the storage medium, wherein the transfer processing method executed by the terminal means comprises the collation step and the selection step, the terminal means further making a computer execute the steps of:
collating the delivery destination information contained in the terminal means with the changed information;
judging whether the changed information matches the delivery destination information contained in the terminal means;
when the changed information matches the delivery destination information contained in the terminal means, comparing the delivery destination information contained in the terminal means with the changed information and then registering the changed information to the terminal means;
when the changed information matches the delivery destination information contained in the terminal means, comparing the delivery destination information contained in the terminal means with the changed information and then registering the changed information to the terminal means;
when the changed information does not match the delivery destination information contained in the terminal means, registering the changed information as the delivery destination information contained in the terminal means into the terminal means; and
registering the new registration information as the delivery destination information contained in the terminal means.

### Brief Description of the Drawings

Fig. 1 is a view showing a first embodiment of the transfer processing system according to the present invention.
Fig. 2 is a schematic view showing a computer means usable in the present invention.
Fig. 3 is a view showing a data structure of a storage means usable in the present invention.
Fig. 4 is a view showing a data structure of a storage means usable in the present invention.
Fig. 5 is a view showing a second embodiment of the transfer processing system according to the present invention.
Fig. 6 is a schematic view showing a computer means and a terminal means in the case of an embodiment shown in Fig. 5.
Fig 7 is a view showing how to collate an addressee name with an address entered using the transfer processing method according to the present invention.
Fig. 8 is a view showing the process of a first embodiment of the transfer processing method according to the present invention.
Fig. 9 is a view showing the process of a second embodiment of the transfer processing method according to the present invention.
Fig. 10 is a view showing a first embodiment of a process to change a delivery destination information in the transfer processing method according to the present invention.
Fig. 11 is a view showing a second embodiment of the process to change the delivery destination information in the transfer processing method according to the present invention.
Fig. 12 is a view showing how to enter changed information according to a screen sent from the terminal means used for the transfer processing system according to the present invention.
Fig. 13 is a view showing a screen display following authentication of an ID and a password on the screen shown in Fig. 12.
Fig. 14 is a view showing a screen display following clicking of "Change" or "Next" on the screen shown in Fig. 13.
Fig. 15 is a view showing a screen display following clicking of "Send" on the screen shown in Fig. 14.
Fig. 16 is a view showing a screen display following storage of a changed information by a second storage means used for the transfer processing system according to the present invention.
Fig. 17 is a view showing a user data registration screen.
Fig. 18 is a view showing a process of a service for providing a guidance of a changed transfer destination address to a sender who has sent a mail matter or a home delivery parcel to a previous address.

### Preferred Embodiments

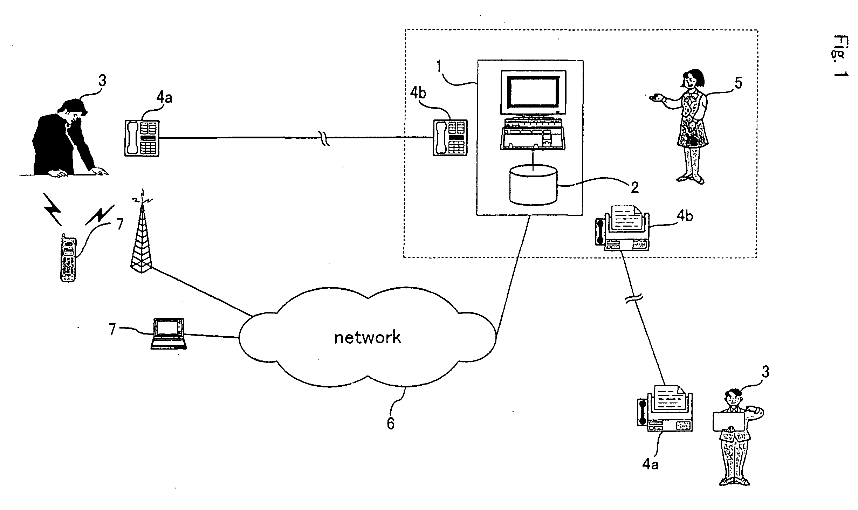

The present invention will be described with reference to the drawings showing various embodiments. The present invention however is not limited to the following embodiments. Fig. 1 is a view showing a first embodiment of the transfer processing system according to the present invention. The transfer processing system shown in Fig. 1 comprises a computer means 1 for retaining delivery destination information, entered changed information and entered new registration information. The computer means 1 shown in Fig. 1 further comprises a storage means 2 for storing the delivery destination information which is also capable of storing the entered changed information and the entered new registration information. The computer means 1 shown in Fig. 1 furthermore comprises a reading means for reading delivery destination information from a sender and inputting the information obtained by reading to the computer means 1, and a collation means for collating the information obtained by the reading means with the retained delivery destination information.

The computer means 1 shown in Fig. 1 makes it possible for an operator 5 to retain changed information by entering and storing the changed information into the storage means 2 contained in the computer means 1, the changed information being sent by a user 3 using a telephone set, a facsimile machine 4a, a facsimile machine 4b or the like.

The computer means 1 shown in Fig. 1 further comprises, in addition to the reading means and the collation means, a means for collating delivery destination information from a sender entered by the reading means with the retained delivery destination information and a means for selecting transfer destination information in relation to the retained delivery destination information.

Further, the computer means 1 shown in Fig. 1 is connected to a network 6 and capable of retain changed information or new registration information received via the network 6. The computer means 1 shown in Fig. 1 installed in, for example, a transportation company, can be accessed via the network 6 such as an internet by using an input means 7 such as a personal computer. When the user 3 such as an individual person or an enterprise moves away, transfers to another division or relocates an office, changed information such as a new delivery destination address can be sent to the computer 1 and stored therein. By performing this processing, the transportation company can use the registered changed information to transfer a distribution matter to the new address by executing the collation means contained in the computer means 1 even if the distribution matter is addressed to a previous address. In the present invention, in addition to accessing the computer means 1 via the network 6 to change delivery destination information, the changed information can also be sent, by using the telephone set, the facsimile machine 4a or the like, to the operator 5 who enters the changed information to the computer means 1 as described above. On the other hand, an enterprise may make a contract so that a transportation company can appropriately access a database server managed by the enterprise to obtain delivery destination information. When the computer means 1 shown in Fig. 1 is installed in a transportation company, the transportation company accepts a mail matter which has not been transferred to a mail office during a transfer time period, and can transfer the mail matter to a transfer destination obtained by collation using the computer means 1.

Delivery destination information, changed information and new registration information received from the input means, and changed information and new registration information obtained from the telephone set, the facsimile machine 4a, the facsimile machine 4b or the like can be stored in the storage means 2 contained in the computer means 1 shown in Fig. 1. The new registration information is for a user such as a personal contractor or an enterprise contractor to register delivery destination information thereof in advance. This information is stored in the storage means 2. When the registration is completed, a user ID and a password, which are identifiers, can be obtained from the manager of the computer means 1. Further, transfer source information such as information about a former delivery destination may also be registered in the new registration information in addition to transfer destination address. Consequently, even if a delivered matter is addressed to the former address, the transfer processing system makes it possible to transfer the delivered matter to the registered transfer destination.

Information to be registered cannot be changed unless the obtained user ID and the obtained password are entered. Delivery destination information indicates a personal information in detail and hence a user ID and a password make it impossible for the delivery destination information be changed by a third person. Further, a user ID and a password are used to send delivery destination information matching the user ID and the password. The computer means 1 collates a user ID and a password entered by the user with a user ID and a password stored in the storage means 2, searches information which matches the user ID and the password, and then sends the information to the user. The sent delivery destination information is the information that has been registered by the user and is equal to the delivery destination information the user attempts to change. The user uses the input means 7 or the like to add the information that has been registered by the user together with changing a transfer destination and the like. The computer means 1 receives the changed information sent by the input means 7 or the like, and updates and stores information related to the delivery destination of the user stored in the storage means 2 for registration.

In the present invention, a user ID and a password can be determined by a personal contractor or an enterprise contractor and then sent to a manager of the computer means 1 to request for registration. Alternatively, the user ID and the password can be determined by the manager of the computer means 1 and then the user is notified by the user ID and the password. Further, in the present invention, the user ID and the password each may be composed of any number of digits, any number of characters or a combination thereof. Also, the user ID and the password each may contain symbols.

According to the present invention, examples of the delivery destination information include: an addressee name including an enterprise name, a person name, a facility name, a store name and the like, an address, an e-mail address, a telephone number, a bank account number, a credit card number and a position in a company. In the present invention, an address before having been changed is stored in either new registration information or changed information as described above. Accordingly, even a distribution matter addressed to a previous address by a sender can be transferred to a changed transfer destination address by referencing the previous address. Further, in the present invention, an exclusive address for an individual person or an enterprise, that is, a permanent address can be specified so that a distribution matter is always sent to a transfer destination even if an address is changed by moving away or office relocation.

When a distribution matter is addressed to the above previous address, the distribution matter is transferred to a transfer destination by referencing the previous address. In the case where the permanent address is specified, a transfer destination can be determined by referencing the permanent address. In the present invention, the permanent address may be composed of any number of digits, any number of characters or any combination thereof. The permanent address may be an address determined by an individual person or an enterprise, or may also be an address determined by the above-described manager. When the permanent address is used however, the used permanent address need be contained in the delivery destination information stored in the storage means 2. Accordingly, in the present invention, registration of the permanent address at the time of newly registering information makes it possible to add the permanent address to the information stored in the storage means 2. Further, the manager of the computer means 1 determines registration of the permanent address and can notifies the user of the permanent address together with registering the same into the information stored in the storage means 2.

Further, in the present invention, if a person moves away twice, three addresses at which the person has resided can be stored as the delivery destination information before having been changed. Still further, in the present invention, either a part of or the whole delivery destination information contained in the changed information can be changed. Furthermore, the storage means 2 stores data for performing a homepage and changing procedures and newly registration procedures at the time of newly registration or changing the information described above. This data can be sent from the computer means 1 to the input means 7.

The computer means 1 shown in Fig. 1 collates information such as an addressee name and an address obtained by the reading means contained in the computer means 1 with retained delivery destination information by the collation means contained in the computer means 1. When the obtained information is old information, the most currently changed information can be selected. In the present invention, the reading means may be separated from the computer means 1, and can send transfer destination information again to the reading means, the transfer destination information being selected as a result of collation of the obtained information received to the computer means 1 via the network 6 with the transfer destination information. In this case, a distribution matter or the like can be transferred by using the sent transfer destination information. Further, in this case, the reading means can send and receive the obtained information or the transfer destination information via an appropriate browser software.

The computer means 1 shown in Fig. 1 collates the obtained information entered by the reading means with the delivery destination information retained in the computer means 1. In this case, the delivery destination information matching the obtained information is selected and the transfer destination information contained in the selected delivery destination information is selected. The distribution matter is transferred according to the selected transfer destination information. When the obtained information is judged to be unchanged as a result of collation with the transfer destination information contained in the delivery destination information retained in the computer means 1, it can be recognized that the transfer destination information selected by collation matches the transfer destination information retained in the computer means 1 and hence the transfer destination information has not been changed. In this case, a message such as "Not changed" may also be displayed for recognition of the unchanged information. Furthermore, when the permanent address is used, the permanent address obtained by the reading means can be collated with the permanent address contained in the delivery destination information retained in the computer means 1 and the most current transfer destination information can be selected from the delivery destination information retained in the computer means 1 to transfer the distribution matter. In the present invention, the obtained information can be sent to the computer means 1 via the network 6 by using a means such as a personal computer or a cellular phone. For example, transfer destination information can be obtained by sending obtained information from a sales office of a transportation company to a business office wherein the computer means 1 is installed by using a means such as a personal computer or a cellular phone and then selecting a transfer destination in the business office wherein the computer means 1 is installed and receiving the obtained information to the personal computer or the cellular phone in the sales office again.

As described above, the delivery destination information from the sender can be collated by the transfer processing system according to the present invention with the retained delivery destination information thereby eliminating extra work and time required for transferring a distribution matter after having been delivered to a former address.

The computer means 1 usable in the present invention can comprise, for example, a computer. According to the embodiment shown in Fig. 1, the computer means 1 comprises a personal computer. Examples of personal computers usable herein include those equipped with a CPU such as PENTIUM (trademark, manufactured by Intel Corp.) wherein an operating system such as WINDOWS (trademark, manufactured by Microsoft Corporation), WINDOWS NT (trademark, manufactured by Microsoft Corporation), OS/2 (trademark, manufactured by International Business Machines Corporation), Unix or Linax can be operated. In the present invention, computer systems other than personal computers may also be used so far as being capable of being connected to the network 6, receiving and registering changed information and new registration information from a user via the network, and selecting transfer destination information by collating the registration information with information obtained from the reading means. Examples of such computer systems include: a workstation, a touch-panel type computer and a general-purpose mainframe computer. However, the computer means 1 usable in the present invention is not limited to the above computers.

Any storage means may be used as the storage means 2 shown in Fig. 1 so fat as being capable of storing changed information and new registration information from a user and performing a homepage, changing procedures, newly registration procedures and the like at the time of new registration or changing of information. That is, the storage medium wherein the program readable by a computer is stored may be used, the program making a computer execute the steps of:
storing delivery destination information into the storage means 2;
searching information matching to delivery destination information to be changed from the stored delivery destination information by using a user ID, a password and the like; registering the searched delivery destination information entered after having been
changed into changed information by a user as the searched delivery destination information;
registering the new registration information as delivery destination information;
collating obtained information obtained from the reading means for reading delivery destination information from a sender with the delivery destination information retained in the computer means 1; and
selecting a transfer destination in relation to the delivery destination information retained in the computer means 1 by the collation step.

Any network in addition to an internet may be used as the network 6 usable in the present invention so far as being capable of remotely sending and receiving information by using an appropriate communication protocol such as LAN/WAN. An examples of the communication protocol usable herein include but not limited to TCP/IP.

Any input means may be used as the input means 7 shown in Fig. 1 so far as being capable of registering or changing user's own information. Examples thereof include: the personal computer, the cellular phone and a car navigation system. When the personal computer is used, it is possible to connect to the network 6 such as an internet at a personal residence, an enterprise or other place wherein the personal computer can be used or by using the cellular phone to access the computer means 1 to register or change the new information. Further, when the cellular phone is used, it is possible to connect to the network 6 such as an internet via a cellular phone company network or a gateway to access the computer means 1 for. the above-described registration or changing of the new information. When a transfer destination is changed to an accommodation facility during a travel on a bicycle, it is possible to connect to the network 6 by using the car navigation system to access the computer means 1 via the network 6 to change the transfer destination.

Further, in the present invention, even if the input means 7 is not equipped, direct entry to the computer means 1 by the operator 5 is possible as described above. In this case, a request from the user is obtained by the telephone set or the facsimile machine 4b. Thereafter, the operator 5 can enter the obtained changed information or the obtained new registration information. Further, the user 3 can notify the operator 5 of the changed information or the new registration information by using the telephone set or the facsimile machine 4a.

Any reading means may be used as the reading means contained in the computer means 1 shown in Fig. 1 so far as being capable of reading delivery destination information from a sender into the computer means 1. Examples of such reading means include a scanner and a digital camera. Further, a program readable by a computer can be used for collating the information obtained by reading with the delivery destination information retained in the computer means 1, the program being capable of converting the obtained information into characters and numeric characters capable of being collated by the computer means 1. This program can be stored in the storage means 2 like the program readable by a computer for executing the above-described transfer processing method.

Further, the reading means contained in the computer means 1 shown in Fig. 1 can be used to enter an addressee name and an address represented by a barcode to the computer means 1 by reading the addressee name and the address with a barcode reader or the like. In the present invention, the program capable of converting the read barcode into characters capable of being collated by the collation means. This program can be stored in the storage means 2. Further, this program can contain the program capable of converting information such as an address of a transfer destination collated with the retained delivery destination address information by the collation means into a barcode. The transfer destination information converted into the barcode can be output as a barcode. For example, an addressee name and an address can be printed as a barcode on a label by a printing means and then a mail matter or a parcel can be transferred by sticking the barcode label thereon.

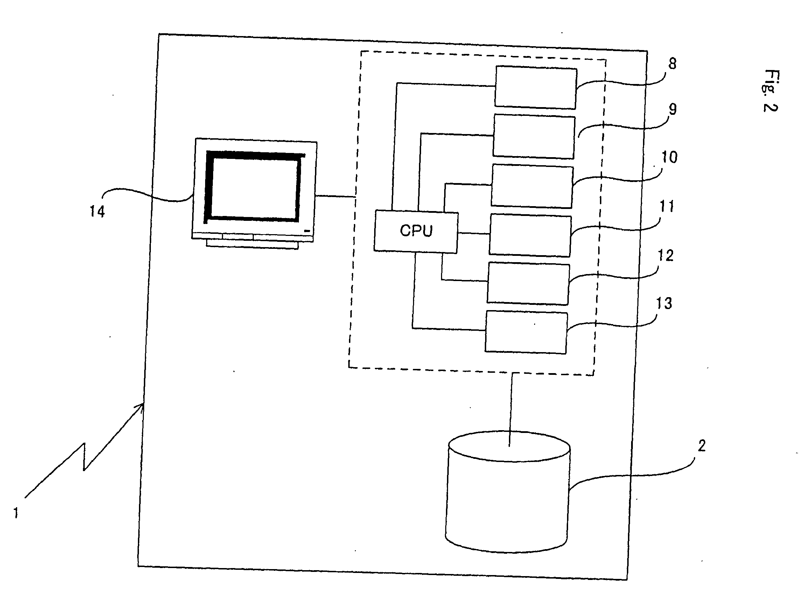

Fig. 2 is a schematic view showing the computer means 1 usable in the present invention. The computer means 1 shown in Fig. 2 comprises the storage means 2 for storing delivery destination information and a means 8 for searching delivery destination information requested to be changed by the user from delivery destination information stored in the storage means 2. Further, the computer means 1 shown in Fig. 2 comprises a means 9 for registering delivery destination information searched by the means 8 for searching delivery destination information, sent to the user, changed by the user and entered by the operator or the like, and a means 10 for registering new registration information as delivery destination information. The computer means 1 shown in Fig. 2 furthermore comprises a reading means 11 for reading delivery destination information from a sender, a collation means 12 for collating information obtained by the reading means 11 with delivery destination information retained by the collation means 12, and a means 13 for selecting a transfer destination in relation to the delivery destination information retained by the collation means 12. Further, the computer means 1 shown in Fig. 2 comprises a display means 14 such as a monitor for displaying the transfer destination information selected by the means 13 for selecting transfer destination information or the information obtained by the reading means 11. The information in the above-described steps is processed by using the

CPU shown in Fig. 2.

In the embodiment shown in Fig. 2, new registration information from the user such as a contractor is registered by the new registration means 10 and stored in the storage means 2 as delivery destination information. When the user changes information related to the user's own delivery destination, the means 8 for searching delivery destination information shown in Fig. 2 searches and receives the information related to the user's own delivery destination stored in the storage means 2 by the above registration. When the operator enters the delivery destination information, the information is displayed on the display means 14. When changed information is entered for the received or displayed delivery destination information, the means 9 for registering the changed information as delivery destination information registers the entered changed information as searched delivery destination information.

Further, in the embodiment shown in Fig. 2, the reading means 11 reads delivery destination information from a sender indicated on a distribution matter such as a mail matter or a home delivery parcel. The collation means 12 collates the information obtained from the reading means 11 is collated with delivery destination information retained in the storage means 2. The collation is performed by searching an addressee name, an address and the like contained in the delivery destination information from the sender that match a name, an address and the like contained in the delivery destination information retained in the storage means 2. In this case, an address of a transfer source such as a former address contained in the delivery destination information retained in the storage means 2 is also searched. The selection means 13 for selecting a transfer destination selects a transfer destination in relation to the retained delivery destination information and then the display means displays the information about the selected transfer destination. When the delivery destination information from the sender matches the transfer destination information contained in the delivery destination information retained in the storage means 2, the transfer destination contained in the delivery destination information remains unchanged.

When the above delivery destination information from the sender differs from the above transfer destination information, the transfer destination information contained in the delivery destination information retained in the storage means 2 is selected.

The collation means 12 according to the present invention can provide a delivery destination of a distribution matter as an output of the collation means 12 to a personal computer or the like installed in a manager of distribution matters from senders, such as a transportation company or a mail office, via a network.

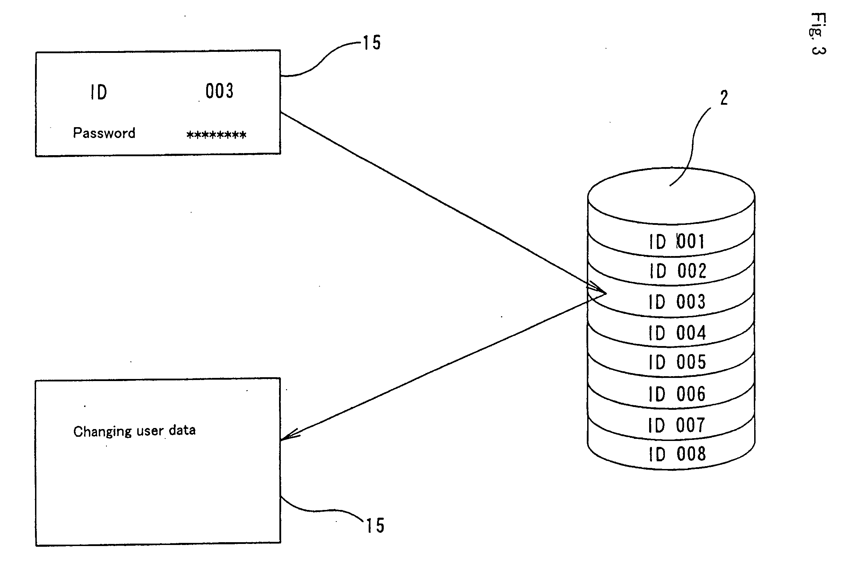

Fig. 3 is a view showing a first data structure of the storage means 2 usable in the present invention. In the data structure of the storage means 2 shown in Fig. 3, user data such as delivery destination information of users is arranged by IDs entered by the users. In Fig. 3, the computer means 1 shown in Fig. 1 can be accessed from the input means 7 shown in Fig. 1 via the network 6 shown in Fig. 1 and an input screen 15 can be received from the computer means 1 shown in Fig. 1 to the input means 7 shown in Fig. 1. A user ID and a password displayed on the received input screen 15 are entered by a user and then sent back to the computer means 1 shown in Fig. 1 and then a user ID that matches the user ID entered by the user is searched. When a password registered in the delivery destination information containing the searched user ID also matches, a user data change screen is sent to the user.

In the present invention, information can be changed by entering changed information from the user data change screen. At the same time, information before having been changed can also be entered from the user data change screen. The changed information is sent to the computer means 1 shown in Fig. 1 and stored in the storage means 2 so that a changed user ID data can be updated. The computer means 1 shown in Fig. 1 searches delivery destination information to be changed using a user ID and a password and sends the searched delivery destination information to the user.

The sent delivery destination information is changed by the user and received again to the computer means 1 as changed information. In the present invention, only a changed portion of the entered changed information that is different from the corresponding portion of the delivery destination information stored in the storage means 2 can be additionally registered.

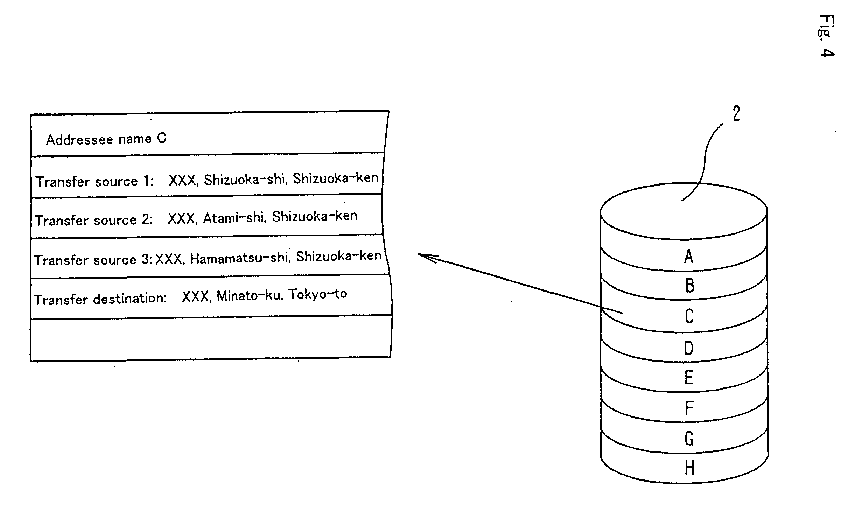

Fig. 4 is a view showing a second data structure of the storage means 2 usable in the present invention. In the data structure of the storage means 2 shown in Fig. 4, the data arranged by user IDs is rearranged by names. Information obtained by the reading means 11 shown in Fig. 2 is entered to the computer means 1 shown in Fig. 1 and then an addressee name entered to the computer means 1 shown in Fig. 1 is collated with a name stored in the storage means 2 by the collation means 12, and user data containing the name that matches the addressee name is selected. Further, if a plurality of selected user data items include the same name, an entered address is collated again with addresses included in the selected user data by the collation means 12 and user data containing an address that matches the entered address is selected.

In the embodiment shown in Fig. 4, as delivery destination information from a sender, a name entered to the computer means 1 shown in Fig. 1 is assumed to be "C" and an address to be "XXX, Atami-shi, Shizuoka-ken." Data of a person named "C" is collated with this information and selected from the storage means 2. In Fig. 4, transfer sources 1 to 3 addresses and transfer destination addresses are extracted as information about the person named "C". In addition to names and addresses shown in Fig. 4, information such as telephone numbers, e-mail addresses, company names and posts in companies is also extracted. The addresses indicated in transfer sources 1 to 3 shown in Fig. 4 are addresses before having been changed. The necessary number of transfer source information items can be specified. For example, in addition to an address before having been changed, a former address, a destination address of a long-term business trip and a destination address of temporary dispatch without family can be entered. An address whereto a mail matter or a home delivery parcel is desired to be transferred can be specified as a transfer destination address.

In the case of moving away, a destination address can be specified. In the case of a long-term business trip, an address of a staying hotel can be specified. In the embodiment shown in Fig. 4, "XXX, Minato-ku, Tokyo-to" is selected as a transfer destination address. This transfer destination address is displayed on the display means 14 as a result of the above-described collation.

In Fig. 4, an addressee name and an address entered to the computer means 1 are used for searching a matching address from the information of transfer sources and transfer destinations. By this collation, an address of a transfer destination contained in selected delivery destination information can be used transfer processing. If the entered address and the transfer destination address are the same, the mail matter or a home delivery parcel is delivered to an address written by a sender as is. Further, if an addressee name is changed by marriage or the like, the collation means 12 shown in Fig. 2 collates the address entered to the computer means 1 shown in Fig. 1 with a transfer source address and a transfer destination address. The collation means 12 shown in Fig. 2 further collates a name with the name before having been changed.

An addressee name and an address are displayed by being output or the like from the transfer destination for the delivery destination specified by the collation and then the addressee name and the address can be used for transfer processing.

In the present invention, it can be made possible of entering a time period as transfer destination information so as to notify the user of expiration of the time period. Further, in the present invention, a plurality of transfer destinations may also be entered according to a time period contained in transfer destination information.

When, for example, "hotel D" is entered as a transfer destination from March to July and "hotel E" is entered as a transfer destination from August to February of the next year, a mail matter or a home delivery parcel, that has been transferred to the hotel D until July, can be transferred to the hotel E from August by using the transfer processing system according to the present invention.

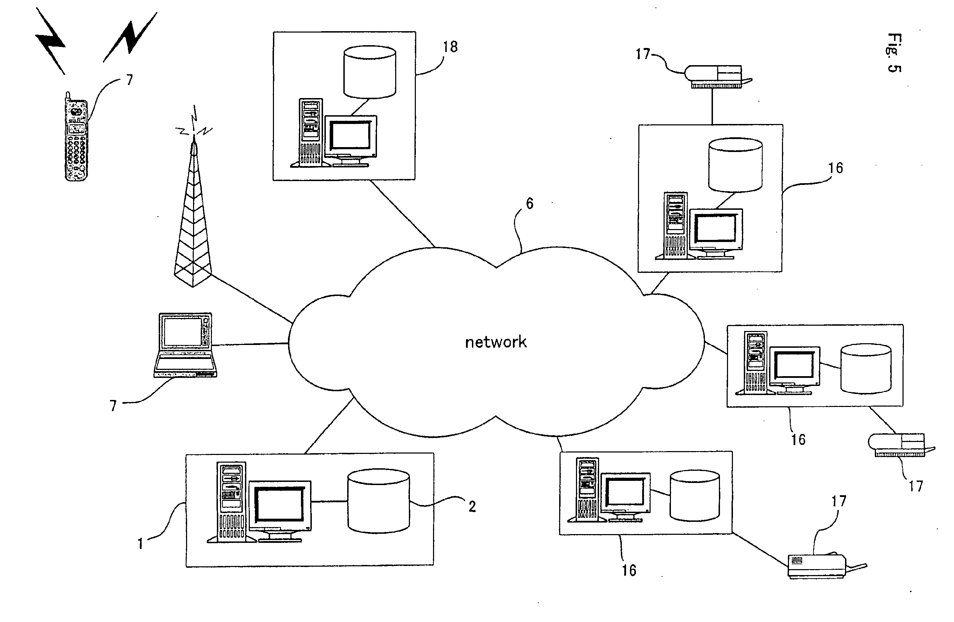

Fig. 5 is a view showing the second embodiment of the transfer processing system according to the present invention. In the embodiment shown in Fig. 5, a plurality of terminal means 16 are installed and connected to the network 6. Further, in Fig. 5, a personal computer and a cellular phone are used as the input means 7. The computer means 1 can be accessed from the personal computer via the network 6. The computer means 1 can be accessed via the cellular phone company's network by the cellular phone connected to the network 6 such as an internet. Changed information or new registration information changed using the personal computer or the cellular phone is stored in the storage means 2 contained in the computer means 1 and then sent from the computer means 1 to the terminal means 16. In Fig. 5, the terminal means 16 is accessed from the computer means 1 during each predetermined period, and the computer means 1 then sends changed information and new registration information stored in the storage means 2 contained in the computer means 1 and updates delivery destination information to be stored into the terminal means 16. The terminal means 16 shown in Fig. 5 stores at least delivery destination information wherein changed information sent from the computer means 1 can be additionally registered. Further, the terminal means 16 comprises the reading means 11, the collation means 12 and the transfer destination selection means 13 shown in Fig. 2.

The computer means 1 shown in Fig. 5 comprises the means for collating delivery destination information contained in the terminal means 16 with changed information stored in the storage means 2 and a means for judging whether the changed information matches the delivery destination information contained in the terminal means 16. The collation means and the judgement means can search the delivery destination information contained in the terminal means 1 related to the changed information. Further, the computer means 1 shown in Fig. 5 comprises a means for comparing delivery destination information contained in the terminal means 16 with changed information and registering the changed information into the terminal means 16 when the changed information relates to the delivery destination information contained in the terminal means 16. For example, only a portion of information required to be changed can be changed and stored in the terminal means 16. The case where changed information does not match delivery destination information contained in the terminal means 16 is the case where the delivery destination information contained in the terminal means 16 contains no information that matches the changed information. A means for registering changed information as delivery destination information contained in the terminal means 16 newly registers this changed information as delivery destination information contained in the terminal means 16 into the terminal means 16.

Further, a means for registering new registration information as delivery destination information contained in the terminal means 16 can register new registration information stored in the storage means 2 into the terminal means 16. In the present invention, changed information and new registration information stored in the storage means 2 can be sent from the computer means 1 to the terminal means 16 to store a program readable by a computer capable of updating delivery destination information contained in the terminal means 16 into the storage means 2. In the present invention, the program readable by a computer is stored in the terminal means 16 and capable of accessing the computer means 1 during each predetermined period and receiving the changed information and the new registration information that has been stored in the storage means 2 followed by storing the same information into the terminal means 16.

In the embodiment shown in Fig. 5, an addressee name and an address read by the reading means 11 contained in the terminal means 16 together with the collation means 12 and the selection means 13 for selecting a transfer destination are collated with an addressee name and an address stored in the terminal means 16. The collation means 12 shown in Fig. 2 carries out the collation as described above. The result of determining a transfer destination by the means 13 for selecting a transfer destination shown in Fig. 2 is displayed on the display means 14 shown in Fig. 2 such as a monitor. Further, the printing means 17 prints the addressee name and the address displayed on the display means 14 on a label. This label can be stuck on a parcel so that the mail matter or a home delivery parcel is transferred to the transfer destination address. In the present invention, an addressee name and an address that have been read, an addressee name collated with the read information and a list of addresses including a plurality of transfer source addresses and a plurality of transfer destination addresses may also be displayed on the display means 14 shown in Fig. 2.

Further, delivery destination information from a sender may be entered using a keyboard or the like instead of using the reading means 11 to read the information.

Still further, when the terminal means 16 is installed in a transportation company, the terminal means 16 may also be connected to a local area network (LAN) to use a personal computer connected to the local area network for collation of the delivery destination information from a sender with the delivery destination information stored in the terminal means 16.

The delivery destination information such as an address or an addressee name read into the terminal means 16 shown in Fig. 5 is collated with the delivery destination information stored in the terminal means 16. When the read address is a former address, the most current transfer destination address is selected according to the delivery destination information updated in each time period from the computer means 1. In Fig. 5, in addition to the display of the transfer destination information on the display means 14 shown in Fig. 2, the printing means 17 for printing the displayed information is equipped making it possible to transfer a mail matter or a home delivery parcel according to the information such as an address printed on the label stuck on the mail matter or the home delivery parcel.

Examples of storage media for storing delivery destination information contained in the terminal means 16 that usable in the present invention include: a database equipped in a server for managing positions of employees and divisions of an enterprise and addresses and telephone numbers of business offices, a database equipped in a transfer service server of a mail office, a database equipped in a POS system usable for home delivery services, and a database equipped in a server of a company managing e-mail addresses or cellular phones. In the present invention, any storage medium may be used so far as being capable of storing and reading delivery destination information such as addresses, names, telephone numbers or e-mail addresses.

In the embodiment shown in Fig. 5, the computer means 1 can be installed in an information management company treating information related to delivery destinations such as individual persons and enterprises. In Fig. 5, the computer means 1 connected to the network 6 appropriately obtains delivery destination information received from the input means 7 or a database server 18 of an enterprise and sends the delivery destination information to a plurality of terminal means 16.

When the computer means 1 is operated in an information management company, a contractor person or a contractor enterprise can register delivery destination information thereof to the information management company and request the information management company to carry on procedures to register the delivery destination information to a transportation company, a mail office, a public office and other target companies having the terminal means 16. For example, the information management company can carry on procedures to change an address by sending changed information to a banking facility or a public office in response to a request from an individual person or an enterprise. In this case, that the information management company is carrying on the procedures for the individual person or the enterprise can be proved by entering a user ID and a password or by the banking facility or the public office that has received the changed information requesting the individual person or the enterprise to confirm the change.

Also, the information management company can only manage information registered by an individual person or an enterprise and can also provide the information in response to a request from a transportation company or a mail office. In this case, the individual person or the enterprise uses the input means 7 to access the computer means 1 managed by the information management company and makes the information management company register changed information or new registration information. The transportation company or the mail office can be made access the computer means 1 to receive and update the new registration information and the changed information. When a public office mails a postal card to be exchanged for a voting card to a voter, the public office can access the computer means 1 to check the name and the address of the voter. In the case where the transportation company or the mail office accesses the computer means 1, a user ID and a password can be specified to prevent the information from being obtained by a third person.

Examples of the database servers 18 of enterprises shown in Fig. 5 include: a database server which stores a database containing office relocation information and addresses and telephone numbers of employees changed by division transfer and job transfer, and a database server owned by a cellular phone company. The information management company and the transportation company having the computer means 1 can obtain the above-described information by making contracts with these enterprises.

In the present invention, a time period wherein the terminal means 16 is accessed from the computer means 1 to send changed information and new registration information for updating delivery destination information is once in each day. Further, in the present invention, the terminal means 16 may be accessible from the computer means 1 to send information as may times as necessary. Furthermore, in the present invention, the computer means 1 can be accessed from the terminal means 16 to receive changed information and new registration information. For example, when distribution matters are distributed twice in one day, changed information can be received twice in one day for two collations before deliveries to update delivery destination information. Further, the computer means 1 may also be accessible from the terminal means 16 to receive the above-described information as may times as necessary in one day.

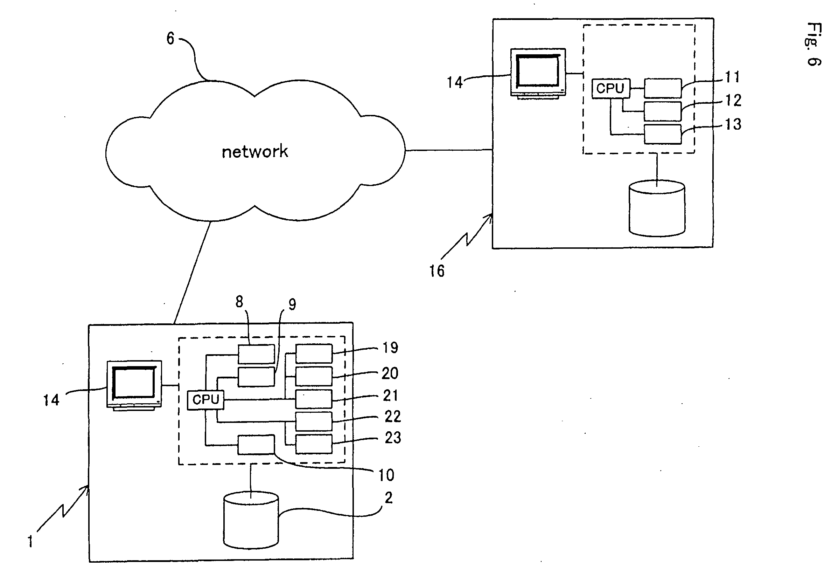

Fig. 6 is a schematic diagram showing the computer means 1 and the terminal means 16 in the embodiment shown in Fig. 5. This computer means 1 comprises, as the computer means 1 shown in Fig. 2, a storage means 2 for storing delivery destination information and a means 8 for searching delivery destination information requested to be changed by a user. The computer means 1 shown in Fig. 6 further comprises a means 9 for registering delivery destination information as searched delivery destination information, the delivery destination information being searched by the means 8 for searching delivery destination information and sent to the user to be changed followed by being entered by an operator, and a means 10 for newly registering new registration information as delivery destination information.

The terminal means 16 shown in Fig. 6 comprises a reading means 11 for reading delivery destination information from a sender, the collation means 12 for collating information obtained from the reading means 11 with delivery destination information retained in the storage means 2, and a means 13 for selecting a transfer destination in relation to delivery destination information retained in the collation means 12. The terminal means 16 shown in Fig. 6 further comprises the display means 14 such as a monitor for displaying the delivery destination information selected by the means 13 for selecting transfer destination information and information obtained by the reading means 11.

The computer means 1 shown in Fig. 6 further comprises a means 19 for collating delivery destination information contained in the terminal means 16 and changed information stored in the storage means 3, and a means 20 for judging whether changed information matches delivery destination information contained in the terminal means. The collation means 19 receives delivery destination information contained in the terminal means 16 and then the judgment means 20 judges whether the delivery destination information matches changed information thereby searching the delivery destination information that matches the changed information. For example, when a name and an old address contained in the changed information are the same as a name and an address contained in the delivery destination information stored in the terminal means 16, the changed information is judged to match the delivery destination information. In particular, matching between the two types of information can be judged considering relationship between telephone numbers before having been changed, e-mail addresses, company names and permanent addresses. The computer means 1 shown in Fig. 5 further comprises a means 21 for registering changed information when the changed information matches delivery destination information contained in the terminal means 16 as a result of collating the changed information with the delivery destination information contained in the terminal means 16. For example, matched delivery destination information is obtained by the collation means 19 and the judgment means 20 and then only an unmatched portion can be fetched and registered with already-stored delivery destination information. If the changed information does not match the delivery destination information contained in the terminal means 16, the changed information can be registered as delivery destination information into the terminal means 16 by the new registration means 22. The new registration information stored in the storage means 2 is further newly registered as delivery destination information into the terminal means 16 by the new registration means 23.

In the present invention, information can be exchanged between the computer means 1 and the terminal means 16 via the network 6. The collation means 19, the judgment means 20, the means 21 for registering changed information after having been collated with delivery destination information into the terminal means 16, the means 22 for newly registering changed information into the terminal means 16, and the means 23 for newly registering new registration information as delivery destination information may be stored in the storage medium contained in the terminal means 16 instead of being stored in the computer means 1. Further, the above-described means can process information by using the CPU shown in Fig. 6.

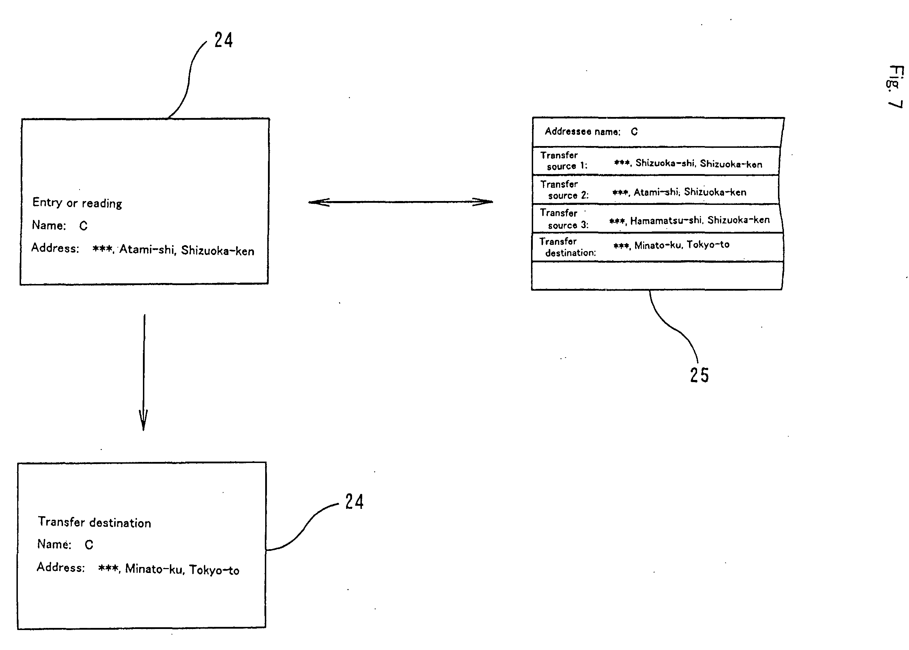

Fig. 7 is a view showing the time of collating an addressee name and an address entered using the transfer processing method according to the present invention. The display screen 24 shown in Fig. 7 is displayed on the display means 14 such as a monitor of the collation means 12 shown in Fig. 2. An addressee name "C" and an address "XXX, Atami-shi, Shizuoka-ken" entered from a keyboard to the collation means 12 shown in Fig. 2 or read by the reading means 11 shown in Fig. 2 are displayed on the display screen 24 shown in Fig. 7, and collated by the computer means 1 in Fig. 1 or by the terminal means 16 in Fig. 5. In Fig. 7, the same addressee name as the addressee name "C" entered by the collation means 12 shown in Fig. 2 is selected and then personal data 25 containing an address that matches the entered address "XXX, Atami-shi, Shizuoka-ken" is selected. In the embodiment shown in Fig. 7, "transfer destination 2" contained in the selected information matches the entered address. Further, according to the selected data 25, the transfer destination of the entered address is changed and hence the entered address is changed to the transfer destination address "XXX, Minato-ku, Tokyo-to." In the present invention, a home delivery parcel or a mail matter can be transferred according to the transfer destination address "XXX, Minato-ku, Tokyo-to."

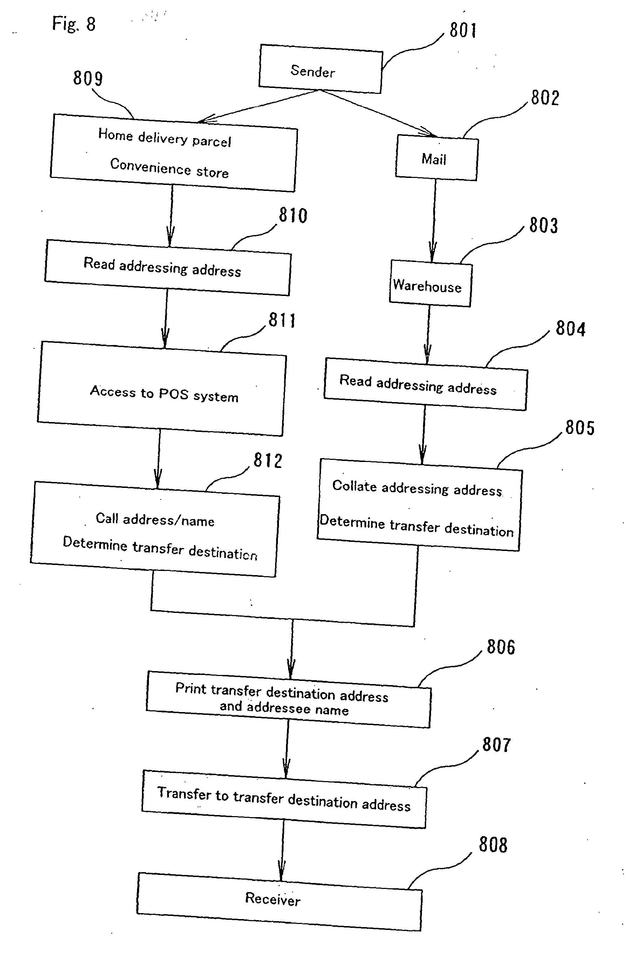

Fig. 8 is a view showing a process of a first embodiment of the transfer processing method according to the present invention. Fig. 8 is the flowchart of the process to deliver a mail matter or a home delivery parcel to a receiver by using a permanent address. In Fig. 8, when a sender of step 801 sends a mail matter, the mail matter whereon a permanent address is written is taken to a mail office in Step 802. The mail matter collected in step 803 is stored in a warehouse. Thereafter, the permanent address is obtained by the reading means 11 shown in Fig. 6 in step 804 and used for collation in step 805. In step 804, the permanent address represented by a barcode may also be obtained by the reading means 11 shown in Fig. 6 for collation. Further, a transfer destination address is determined in step 805. Next, the address and the addressee name of the transfer destination determined in step 806 are printed, distributed to the transfer destination address in step 807, and delivered to the receiver in step 808.

Further, when the sender in step 801 sends a home delivery parcel, the home delivery parcel is handed over to a company such as a transportation company or a convenience store which treats home delivery parcels in step 809. The parcel handed over to the handling company in Fig. 8 is collected by a transportation company. Next, as step 810, the transportation company obtains a permanent address by the reading means 11 shown in Fig. 6, uses a POS system as the terminal means 16 shown in Figs. 5 and 6 in step 811, and uses the obtained permanent address for collation. Further, an address and an addressee name of a transfer destination are determined in step 812 and the address and the addressee name of the determined transfer destination are printed in step 806. Furthermore, the home delivery parcel is distributed to the transfer destination address printed in step 807 and then delivered to a receiver of step 808.

In this case also, the permanent address represented by a barcode written on a delivery slip can be used. Further, the POS system accesses the computer means 1 shown in Fig. 5 or 6 to receive delivery destination information such as an address or a telephone number to update the stored delivery destination information once in one day. In the present invention, it is possible to make the stored delivery destination information be updated more than once in one day.

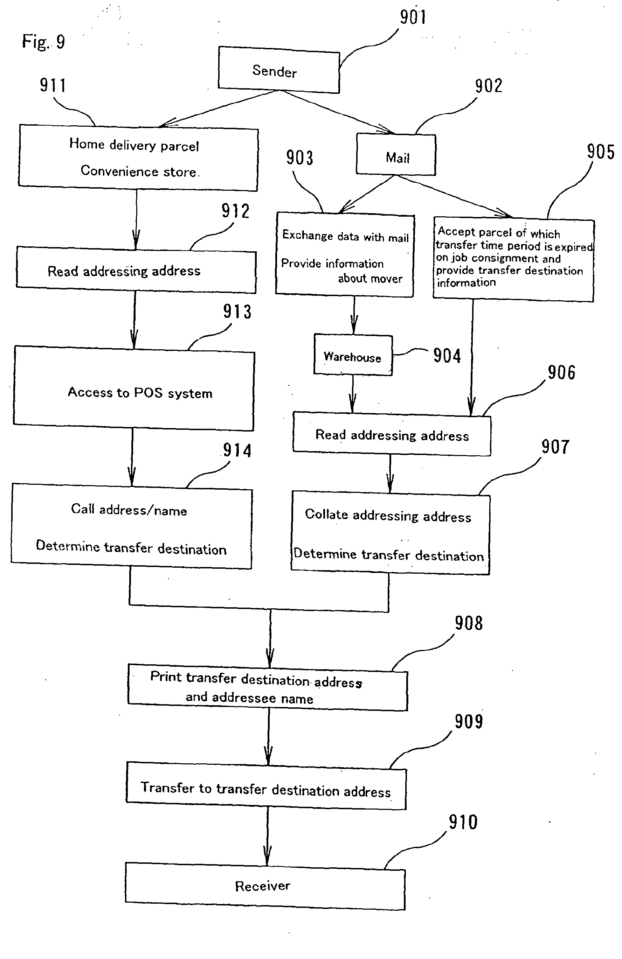

Fig. 9 is a view showing a process of a second embodiment of the transfer processing method according to the present invention. Fig. 9 is the flowchart of the process to deliver a mail matter or a home delivery parcel by using an old address. When a sender of step 901 sends a mail matter, the mail matter whereon the old address is written is taken to a mail office in step 902. Changed information is provided to the terminal means 16 shown in Fig. 5 or 6 such as a database server owned by the mail office, and the mail matter collected in step 904 is stored in a warehouse in step 903.

Further, a mail matter with an expired transfer time period is accepted on job consignment, or transfer destination information is provided for the mail matter in step 905. Thereafter, the old address and the old addressee name are obtained by the reading means 11 shown in Fig. 6 for collation in step 906. In step 906, the address and the addressee name represented by a barcode may also be obtained by the reading means 11 for collation. Next, the address and the addressee name of the transfer destination determined in step 907 are printed in step 908. The mail matter is distributed using the printed transfer destination address and then delivered to a receiver of step 910 in step 909.

Further, when the sender of step 901 sends a home delivery parcel, the home delivery parcel is handed over to a company such as a transportation company or a convenience store which treats home delivery parcels in step 911. The home delivery parcel handed over to the handling company is collected by a transportation company. Next, the old address and the old addressee name are obtained by the transportation company using the reading means 11 shown in Fig. 6 in step 912 and then the POS system is accessed to collate the obtained address and the obtained addressee name in step 913. An address and an addressee name of a transfer destination are determined in step 914 and printed in step 908. Next, the home delivery parcel is distributed to the printed transfer destination address and then delivered to a receiver of step 910 in step 909. In this case also, the address and the addressee name represented by a barcode written on a delivery slip can be used. Further, the POS system can access the computer means 1 shown in Fig. 5 or 6 to receive delivery destination information such as an address or a telephone number to update retained delivery destination information once in one day.

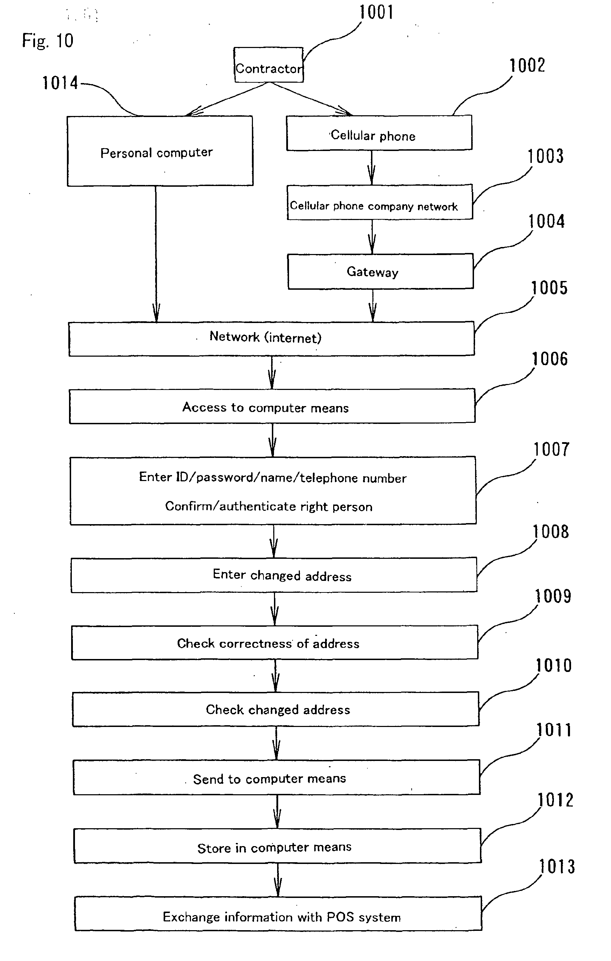

Fig. 10 is a view showing a first embodiment of a process to change delivery destination information by the transfer processing method according to the present invention. Fig. 10 shows a process to change delivery destination information by using a personal computer or a cellular phone as the input means 7 shown in Fig. 5. A contractor of step 1001 is a receiver to be a delivery destination. As for an enterprise, the enterprise may be assigned as a contractor and an employee may be assigned as a receiver. Further, the contractor may be assigned as a representative and a member of a group may be assigned as a receiver. The contractor uses the cellular phone of step 1002 to connect to a cellular phone company network of step 1003. Next, the contractor connects to a network of step 1006 such as an internet of step 1005 via a gateway of step 1004. The contractor further accesses the computer means 1 shown in Fig. 5 or 6 via the network and receives data used to change information in step 1006.

In the present invention, information can be changed according to the received data.

A user ID, a password, a name, a telephone number or the like is used at the time of changing information by connecting to the computer means 1 shown in Fig. 5 or 6 so that the information cannot be changed by persons other than the contractor as described above. In the present invention, the user ID and the password each may be composed of any number of digits, any number of characters or a combination thereof.

When the user ID and the password entered in step 1007 are identical so as to confirm the right person, the entered information is authenticated and changing of the information is permitted.

After the information such as an address or a telephone number is changed in step 1008 shown in Fig. 10, the correctness of the changed information is checked in step 1009. When the address and the telephone number are judged to be correct in step 1009, the changed information is displayed in step 1010. The changed information is checked in step 1010 and then sent to the computer means 1 shown in Fig. 5 or 6 in step 1011. Next, the changed information is stored in the computer means 1 shown in Fig. 5 or 6 in step 1012. Thereafter, the changed information is sent to the terminal means 16 shown in Fig. 5 or 6 of the POS system for updating information in a predetermined period, and then delivery destination information is updated to the changed information in step 1013. The tapping prevention program (e.g. SSL) can be used in step 1007 to prevent the user ID and the password from being tapped.

Further, the contractor using the personal computer in step 1014 connects to the network such as an internet of step 1005. Next, the contractor connects to the computer means 1 shown in Fig. 5 or 6 via a network in step 1006, and enters a user ID, a password, a name, a telephone number or the like for checking that the right person is attempting to change information in step 1007. In step 1007, the correctness of the entered information is further checked, and when the information is correct, the person who entered the information is authenticated as the right person. The contractor then enter changed information such as an address or a telephone number in step 1008.

The correctness of the entered information is checked in step 1009 and the changed information such as an address is displayed in step 1010. When the correctness of the changed information is finally confirmed, the changed information is sent to the computer means 1 shown in Fig. 5 or 6 in step 1011 and then stored in the computer means 1 shown in Fig. 5 or 6 in step 1012. The changed information is then sent to the terminal means 16 shown in Fig. 5 or 6 of the POS system or the like for updating information in a predetermined time period and delivery destination information is updated to the changed information. In the present invention, the POS system can access the computer means 1 shown in Fig. 5 or 6 once in one day and receive and update transfer destination information such as an address or a telephone number. In the present invention, the transfer destination information may be updated more than once in one day.

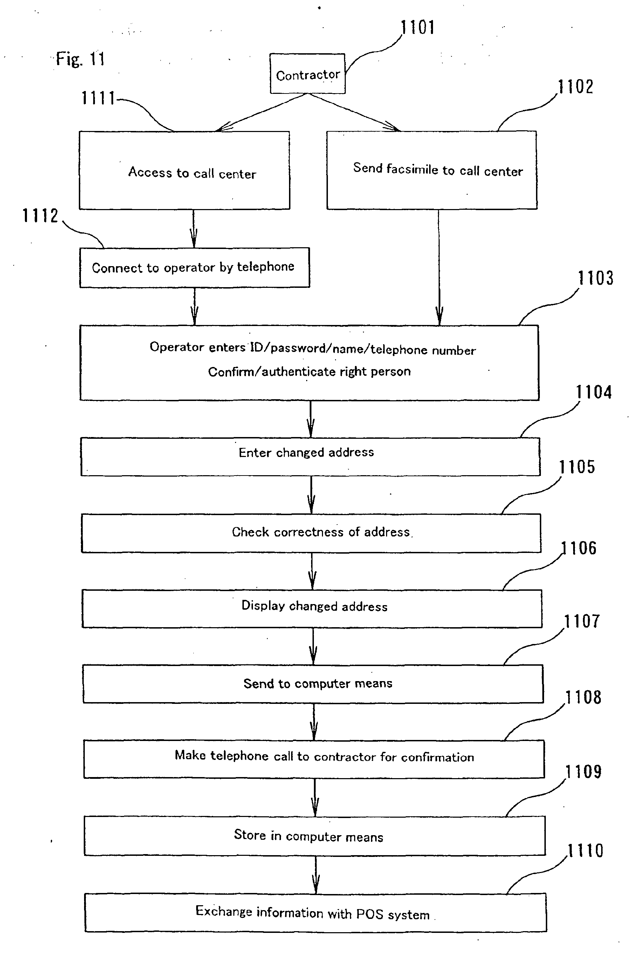

Fig. 11 is a view showing a process to change delivery destination information by the transfer processing method according to the present invention. Fig. 11 shows the process to change information such as an address by using a home telephone set or a facsimile machine. In step 1101, a contractor sends a facsimile whereon a user ID, a password, a name, a telephone number and the like are written to a call center by using the facsimile machine in step 1102. In the call center, an operator enters the user ID, the password, the name, the telephone number and the like in step 1103. In the present invention, the call center is installed in an information management company or a management department of a transportation company having the computer means 1 shown in Fig. 5 or 6. The correctness of the entered information is checked, and when the information is judged to be correct, the person who entered the information is authenticated as the right person. Next, the address written on the sent facsimile is used to change an address in step 1104, matching between the changed address and the information written on the facsimile is checked in step 1105, and thereafter the changed information is displayed in step 1106. The changed information is sent to the computer means 1 shown in Fig. 5 or 6 in step 1107 and thereafter the contents of the sent changed information are confirmed by a means such as making a telephone call to the contractor. In this case, a facsimile may also be used for the confirmation. After the confirmation in step 1108 is ended, the changed information is sent to the computer means 1 shown in Fig. 5 or 6 in step 1109. The information stored in the computer means 1 shown in Fig. 5 or 6 is sent to the POS system in each predetermined time period to update transfer destination information in step 1110. In the present invention, the computer means 1 shown in Fig 5 or 6 can be accessed several times in one day to update information.

Further, when the contractor desires to change information by using the home telephone set, the contractor makes a telephone call to the call center of step 1111.

The call is connected to the operator through a telephone set in step 1112. Next, the contractor tells the operator the user ID, the password, the name, the telephone number and the like in step 1113 and then the operator enters these information items. Further, when the operator is authenticated as the right person by entry of the user ID and the password in step 1103, the information to be changed is entered in step 1104.

Next, the correctness of the changed address is checked in step 1105 and the changed address is displayed in step 1106. The changed address is sent to the computer 1 shown in Fig. 5 or 6 in step 1107 and thereafter the correctness of the sent address is repeatedly confirmed to the contractor in step 1108. In this case, any means including a telephone set or a facsimile machine may be used for confirmation. When the address is confirmed to be correct as a result of making an inquiry to the contractor, the changed information is registered in the computer means 1 shown in Fig. 5 or 6 in step 1109. The information registered in the computer means 1 shown in Fig. 5 or 6 is sent to the POS system in each predetermined time period to update the transfer destination information in step 1110. In the present invention, the computer means 1 shown in Fig. 5 or 6 can be accessed a several times in one day to update information.

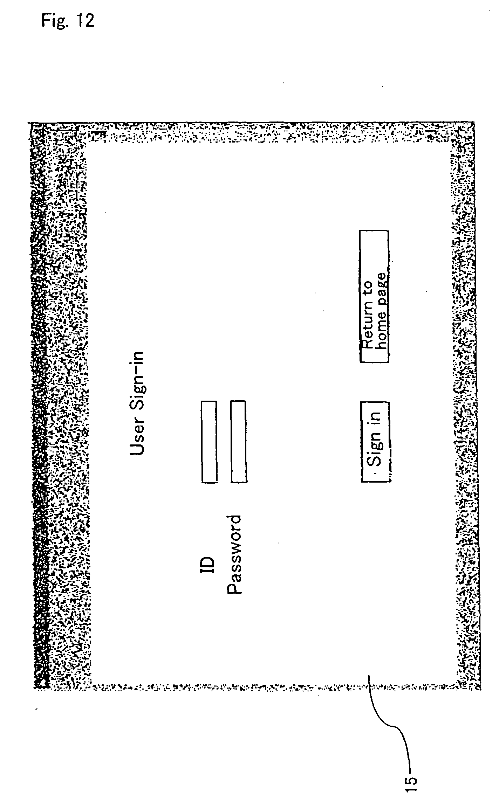

Fig. 12 is a view showing a screen sent from the computer means 1 shown in Fig. 5 or 6.

The input screen 15 shown in Fig. 12 is a change screen displayed after having been selected on a homepage screen sent from the computer means 1 shown in Fig. 5 or 6 accessed via the network 6 by using the input means 7 shown in Fig. 5. An [ID] and a [Password] can be entered from the input screen shown in Fig. 12 and the [ID] and the [Password] are authenticated by clicking [Sign-in] displayed on the bottom portion of the input screen 15. A described above, the [ID] and the [Password] each can be composed of any number of digits, any number of characters or a combination thereof.

In the embodiment shown in Fig. 12, authentication is performed by entering the [ID] and the [Password] and then clicking [Sign-in]. When the [ID] and the [Password] are correct, the [ID] and the [Password] are authenticated and a user data change screen is received. If the [ID] and the [Password] are incorrect, the [ID] and the [Password] need be reentered. When the entry operation is desired to be canceled, [Return to homepage] can be clicked to return to the homepage.

In the present invention, in case of entering incorrect information, it is possible to enhance the security by specifying the number of times of entry to invalidate the [ID] and the [Password] or by always calling a telephone number each time the telephone number is changed according to changed information. Further, the input means 7 shown in Fig. 5 makes it possible for anyone to access the computer means 1 shown in Fig. 5 or 6 by using a personal computer for personal use, a cellular phone or a personal computer used in an enterprise to display the input screen 15. Further, in the present invention, it is possible to enhance the security by making it impossible for even a personal computer or a cellular phone used personally by the contractor to retain an [ID] and a [Password]. Furthermore, the security may further be enhanced by making the contractor enter his/her [Name] or [Telephone number before having been changed].

An [ID] and a [Password] are authenticated when matching to retained information is confirmed as a result of collation by the computer means 1 shown in Fig. 5 or 6. If the [ID] and the [Password] do not match the retained information, it is possible to make display [Please enter again] or disconnect the access to the computer means 1 shown in Fig. 5 or 6.

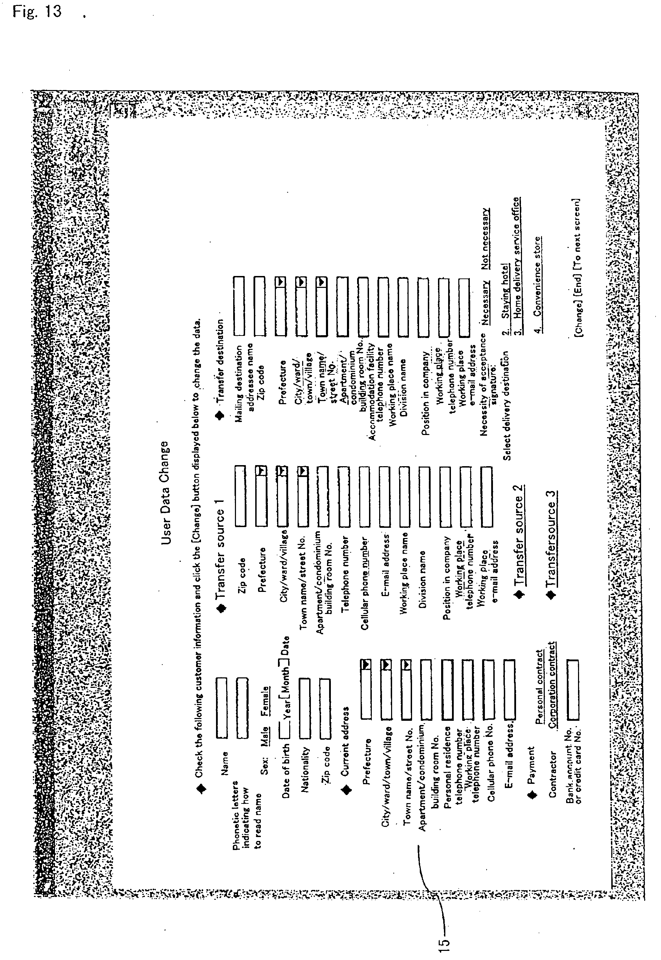

Fig. 13 is a view showing a next screen displayed when the ID and the password are authenticated. Delivery destination information containing [Prefecture], [City/ward/village], [Town name/address], [Room No. of apartment, condominium building or the like], [Personal residence telephone number], [Working place telephone number], [Cellular phone number], [E-mail address], [Bank account number], [Credit card number] and the like as a current address in addition to [Name], [Phonetic letters indicating how to read the name], [sex], [Date of birth], [Nationality] and [Zip code] as a current address is displayed. A previously entered address is displayed as the current address shown in Fig. 13. Further, when a transfer source is not the current address because of a long-term business trip or a temporary dispatch without family, the above-described items can be entered as [Transfer source 1]. In addition, when a plurality of transfer sources are present, the screen of [Transfer source 2] or [Transfer source 3] can be opened by clicking [Transfer source 2] or [Transfer source 3] to enter necessary data. Further, when there is no transfer source but the current address, the entry operation can be omitted.

In the present invention, older addresses than the addresses entered to [Transfer source 1] and [Transfer source 2] as the current addresses can be entered so that a home delivery parcel addressed to an address in any time period can be delivered to a correct transfer destination. In Fig. 13, the date of birth shall be entered with half size characters, for example, 03 11 1989 and the zip code shall be entered using half size characters and a hyphen (-), for example, 211-0033. In the present invention, the date of birth may also be selectable. The date of birth may further be specified as March 11, Heisei 1. Further, a hyphen (-) does not have to be used to enter the zip code.

Among the items shown in Fig. 13, the items in the selectable columns may be made selectable. In Fig. 13, [Prefecture], [City/ward/village] or [Town name/address] can be selected. In the present invention, items necessary for a delivery destination may be added to the above-described items. Further, among the items shown in Fig. 13, the [Sex] or [Contractant] can also be selected by clicking the corresponding item. In this case, the color of the selected item can be changed or unselected items can be erased to identify the selected item. Any type of display other than the above-described display types is available so far as being capable of identifying the selected items.

In the embodiment shown in Fig. 13, the information displayed on the input screen 15 can be changed by clicking [Change] displayed on the bottom portion of the input screen 15 after checking the previously entered information such as the name and the current address. Further, the entry operation can be ended without changing the information displayed on the input screen 15 by clicking [End]. When [End] is clicked, the display can be returned to the homepage screen. In the present invention, the display may be made returned to the input screen shown in Fig. 12. In Fig. 13, the transfer destination information that has hitherto been displayed is moved to the current address column and the information that has been entered to the current address column is erased.

In the present invention, the information that has been entered to the current address column may be moved to [Transfer source 1], [Transfer source 2] or [Transfer source 3].

The [Transfer destination] column enters a state where entry is possible by clicking [Change] and then an item to be changed can be entered. By this operation, a home delivery parcel distributed to the address moved to the current address is delivered to the [Transfer destination] address entered from the input screen 15 shown in Fig. 13 after collation by the collation means 12 shown in Fig. 12 as described above. Further, in Fig. 13, a next screen can be displayed by clicking [Next] after correcting a portion of the delivery destination information. This function is provided to make it possible to correct only few items without changing either a [Current address] or a [Transfer destination] and thereafter send the data to the computer 1 shown in Fig. 5 or 6 to solve the following problem. When incorrect entry is aware of, the display shall be returned to the input screen 15 shown in Fig. 13, and when [Change] is clicked on the input screen 15 however, an entered [Transfer destination] is automatically moved to the [Current address] column.

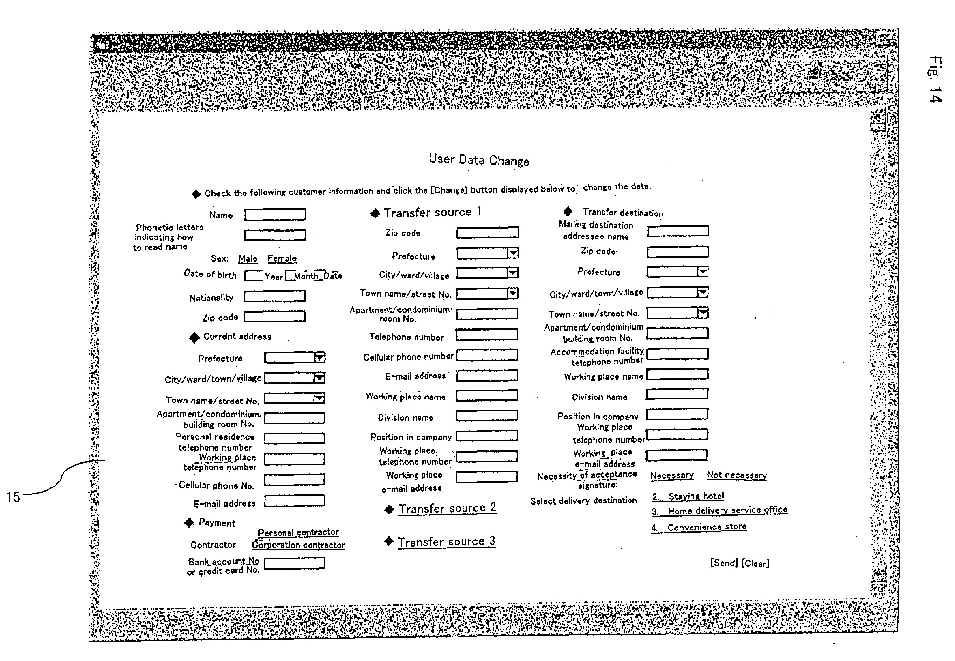

Fig. 14 is a view showing a next screen displayed when [Change] or [Next] is clicked in Fig. 13. Fig. 14 shows that, when [Send] displayed on the bottom portion of the input screen 15 is clicked after a transfer destination is added or information is entered to [Transfer destination] in Fig. 13 and then the correctness of the changed information is checked, the changed information can be sent to the computer means 1 shown in Fig. 5 or 6 and stored in the storage means 2 shown in Fig. 5 or 6. In order to erase whole entered information and reenter the information, the entered information can be erased by clicking [Clear]. In this case, the information moved to the [Current address] column is not erased.

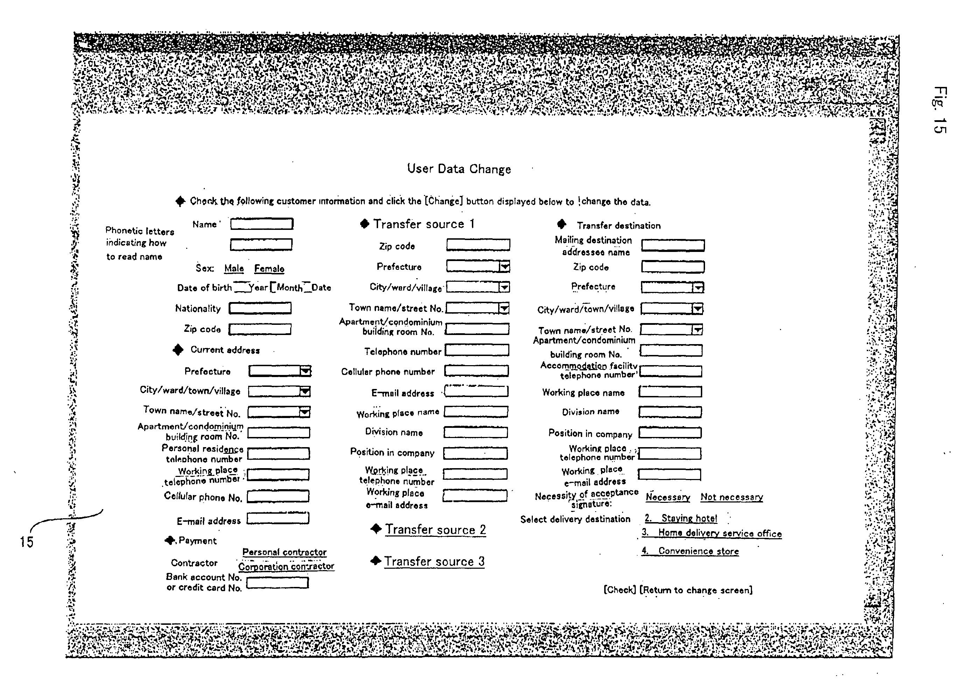

Fig. 15 is a view showing a next screen displayed when [Send] is clicked in Fig. 14.

Fig. 15 shows that the changed information is registered in the computer means 1 shown in Fig. 5 or 6 by clicking [Check] displayed on the bottom portion of the input screen 15 to confirm that the correctness of the changed information is checked after the change is confirmed and the changed information is sent in Fig. 14. The changed information can further be corrected by clicking [Return to change screen]. When [Return to change screen] is clicked, it is possible to return to the input screen 15 shown in Fig. 13. When [End] is clicked on the input screen 15, it is possible to return to the homepage screen. In the present invention, direct return to the input screen 15 shown in Fig. 14 or the homepage screen is also made possible by clicking [Return to change screen] as described above. Further, the changed information can be stored and registered in the storage means 2 contained in the computer means 1 shown in Fig. 5 or 6 by clicking [Send] shown in Fig. 14 and [Check] shown in Fig. 15 again after correcting the incorrect entry on the input screen 15 shown in Fig. 15.

In the present invention, the selection may also be made by touching a touch panel of a touch panel type computer instead of clicking. Further, when a cellular phone is used, the selection may also be made by using a number. Screens are not limited to the screens shown in Figs. 13 to 15. Instead, buttons such as [Next] and [Return] may be designated and different screens may be displayed by clicking [Current address], [Transfer source 1] and [Transfer destination], respectively. Further, buttons such as [Return to homepage], [Return to previous screen], [Cancel] and the like may be designated on the input screens 15 shown in Figs. 13 to 15, respectively. Furthermore, the entered information is not limited to the above-described information, but entry of a family address, a name, an e-mail address of a working place and the like may also be made possible.

When the information is changed in any one of Figs. 13 to 15, delivery destination information stored in the terminal means 16 shown in Fig. 5 or 6 such as the POS system can be updated. As for a home delivery parcel, delivery destination information thereof stored in the POS system is updated by accessing the POS system from the computer means 1 shown in Fig. 5 or 6 to send changed information or by accessing the computer means 1 shown in Fig. 5 or 6 by using the POS system to receive information in each predetermined time period. Further, in the present invention, the computer means 1 shown in Fig. 5 or 6 may also be accessed to receive changed information to be entered to the POS sxstem by using a means such as a separately installed personal computer connected to the POS system.

The case where changed information is sent from the computer means 1 shown in Fig. 5 or 6 will be described. Make a connection to the network 6 by using the computer means 1 shown in Fig. 5 or 6. Next, access the POS system via the network 6. After the POS system authenticates the computer means 1 shown in Fig. 5 or 6, send the changed information from the computer means 1 shown in Fig. 5 or 6 to the POS system. Information stored in the POS system is updated according to the sent changed information. A transportation company obtains an addressee name and an address written on a home delivery parcel or an address and an addressee name represented by a barcode to the POS system by using the reading means 11 shown in Fig. 6 and collates the obtained addressee name and the address with retained information. When the addressee name and the address are changed, the transportation company displays the changed [Transfer destination] address and uses the changed [Transfer destination] address to transfer the home delivery parcel. By this operation, the work and the time required to deliver the parcel to the old address and then transfer the parcel to the transfer destination can be eliminated thereby realizing efficient distribution. The transfer processing system according to the present invention can be used for either home delivery parcels and mail matters as described above.

When changed information is received in each predetermined time period from the POS system to the computer means 1 shown in Fig. 5 or 6 to update retained information, make a connection to the network 6 shown in Fig. 5 or 6 and access the POS system via the network 6. After the computer means 1 shown in Fig. 5 or 6 authenticates the POS system, receive the changed information to the POS system. The information stored in the POS system is updated according to the received changed information.

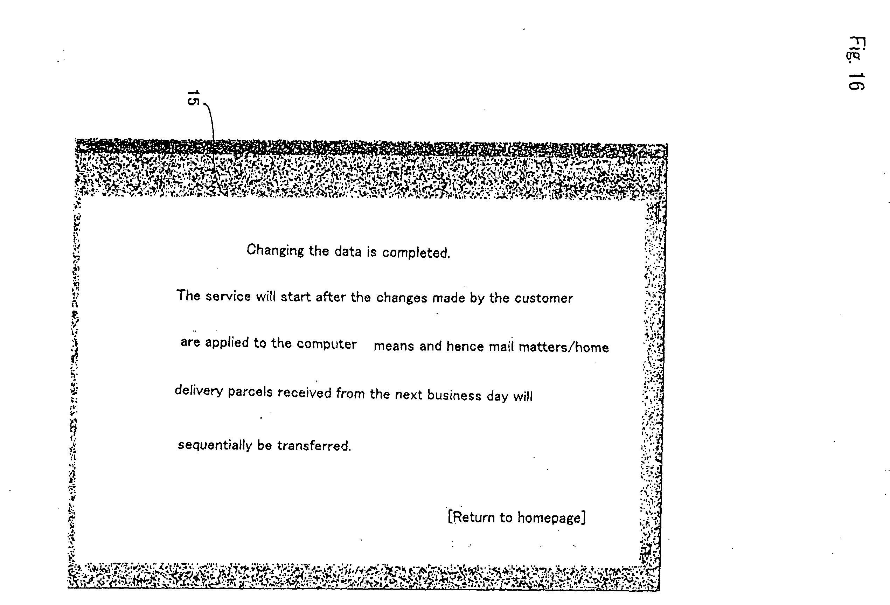

Fig. 16 is a view showing a screen displayed after the changed information is stored in the storage means 2 shown in Fig. 5 or 6. The input screen 15 shown in Fig. 16 shows that the changed information has been stored and data change is completed. In Fig. 16, any type of display may be used so far as being capable of showing that the changed information is stored in the storage means 2 shown in Fig. 5 or 6. Further, in Fig. 16, [Return to homepage] displayed on the bottom portion of the input screen 15 can be clicked to return to the homepage screen. In the present invention, a display time period for the input screen 15 shown in Fig. 16 may also be specified so that the input screen 15 returns to the homepage screen after having been displayed for the predetermined time period.

Next, the case where information is newly registered in the storage means 2 shown in Fig. 5 or 6 by using the cellular phone shown in Fig. 5 will be described. Make a connection to a cellular phone company network and then make a connection to the network 6 shown in Fig. 5 or 6 such as an internet via a gateway. Access the computer means 1 shown in Fig. 5 or 6 via the network 6 shown in Fig. 5 or 6. By accessing the computer means 1 shown in Fig. 5 or 6, a homepage screen stored in the storage means 2 shown in Fig. 5 or 6 can be read. A user data registration screen can be accessed in addition to the input screen for the [ID] and the [Password] described above from the homepage screen.

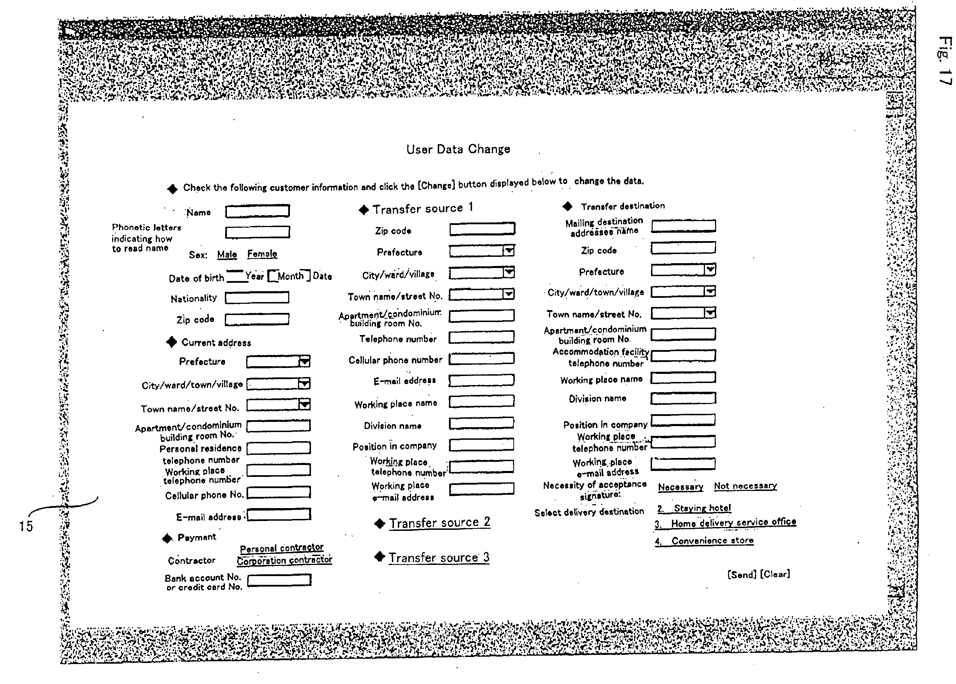

Fig. 17 is a view showing the user data registration screen. The input screen 15 shown in Fig. 17 is the same as the input screen shown in Fig. 14 and hence all items including a name, a date of birth, a current address, a transfer source and a transfer destination shall be entered from the input screen 15 shown in Fig. 17. The entered registration information is sent to the computer means 1 shown in Fig. 5 or 6 by selecting [Send] displayed on the bottom portion of the input screen 15 after entering the registration information displayed on the input screen 15 shown in Fig. 17.

Further, when registration information is necessarily reentered, [Clear] can be selected to erase the entered registration information. When the registration information is sent to the computer means shown in Fig. 5 or 6, the same screen as the input screen 15 shown in Fig. 15 is displayed. When [Check] is selected on this screen, the registration information is stored in the storage means 2 shown in Fig. 5 or 6. When the registration information has been stored, a display indicating that the registration has ended appears. Further, when the registration information that has been sent to the computer means 1 shown in Fig. 5 or 6 is necessarily changed, a portion required to be changed can be changed by selecting [Return to change screen] and then the changed registration information can be stored in the storage means 2 shown in Fig. 5 or 6.

The registered registration information is sent to the terminal means 16 shown in Fig. 5 or 6 such as the POS system by using the computer means 1 shown in Fig. 5 or 6 and stored in the terminal means 16 shown in Fig. 5 or 6. When a parson to register information is confirmed as a right person by submitting or mailing an identification card, a user ID and a password are issued together with notifying the person of a using start date. In the present invention, in the case where information is sent and received via the network 6 shown in Fig. 5 or 6 or the cellular phone company network, tapping can be prevented by using the tapping prevention program (e.g. SSL).

Further, in the present invention, when a mail matter or a home delivery parcel is addressed to a former old address, a transfer destination for distributing the mail matter or the home delivery parcel is checked by the system and the method according to the present invention containing a service for sending a guidance of the transfer destination to a sender. Further, use of the system and the method according to the present invention makes it unnecessary to go to a banking facility such as a bank to notice a change of an address. Furthermore, when a post in a company, a telephone number, an address or the like is changed by a transfer from a division, a transfer within a division, a relocation of an office or the like, the changed information can be sent to the computer means 1 shown in Fig. 5 or 6 by using the system or the method according to the present invention and make the changed information stored in the storage means 2 shown in Fig. 5 or 6. By this processing, even when a document or the like addressed to the old address is distributed from another enterprise, the document or the like can be delivered to the transfer destination and the information about the transfer destination can also be provided to the sender. Further, in the present invention, any means including a personal computer may be used for registering user data in addition to the cellular phone.

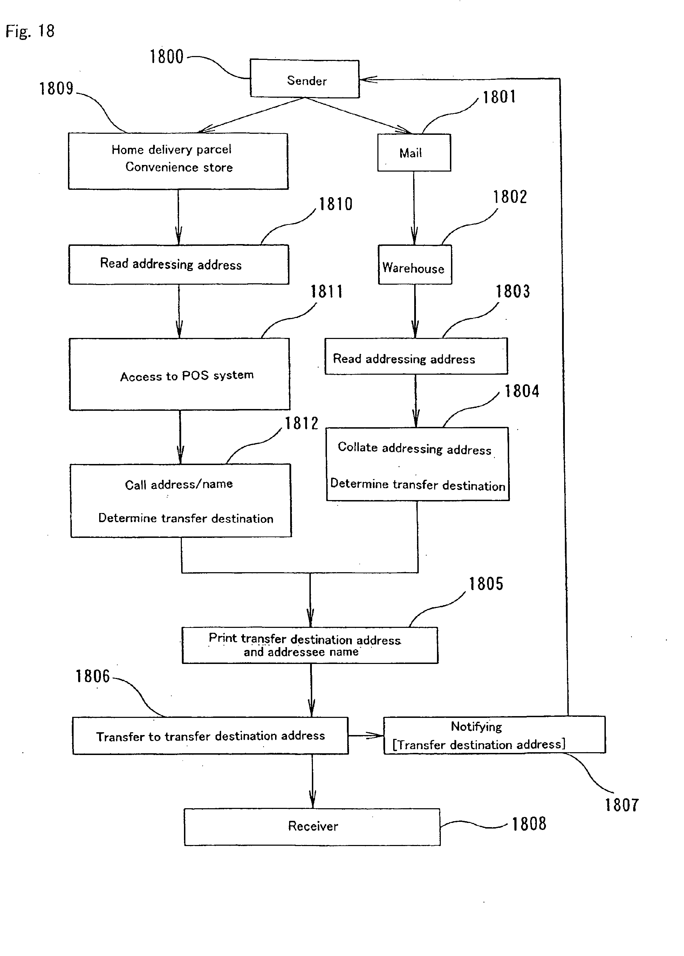

Fig. 18 is a view showing a process of the service for guiding a changed transfer destination address to a sender of a mail matter or a home delivery parcel addressed to an old address. The sender of step 1800 takes a mail to a mail office or drops the mail into a mailbox in step 1801. The mail matter dropped into the mailbox is collected and stored in a warehouse in step 1802. For the mail matter, an addressee name and an address are obtained by the reading means 11 shown in Fig. 6 in step 1803 and then the terminal means shown in Fig. 5 or 6 is accessed to collate the obtained addressee name and the address. Further, a transfer destination address is determined in step 1804 and then the determined transfer destination address is printed in step 1805. A label whereon the transfer destination address is printed is stuck on the mail matter and transferred to the transfer destination address in step 1806 and then distributed to a receiver of step 1808. In this case, a postal card whereon the transfer destination address is written is mailed to the sender of step 1800 on behalf of the receiver in step 1807. In the present invention, the postal card may be created by either hand writing or printing together with the label.

In Fig. 18, in the case of a home delivery parcel, the home delivery parcel is taken to an agency such as a transportation company or a convenience store in step 1809. The home delivery parcel taken to the agency is collected by the transportation company.

For the home delivery parcel, an addressee name and an address are obtained by the reading means 11 shown in Fig. 6 in step 1810 and then the POS system is accessed to collate the obtained addressee name and the address in step 1811. Next, a transfer destination address is determined in step 1812 and the determined address and the addressee name are printed in step 1805. A label or the like whereon the transfer destination address is printed is stuck on the parcel, the home delivery parcel is transferred to the transfer destination address in step 1806, and then distributed to the receiver of step 1808. In this case, a postal card whereon the transfer destination address is written is mailed to the sender of step 1800 on behalf of the receiver in step 1807.

In the present invention, the addressee name and the address are not only written.

When the addressee name and the address are represented by a barcode, the addressee name and the address are obtained by the reading means 11 shown in Fig. 6 reading the barcode. The obtained addressee name and the address are collated with a name and an address stored in the terminal means 16 shown in Fig. 5 or 6. When no change is found to be made in the addressee name and the address as a result of the collation, the parcel is distributed to the address written by the sender as is. However, when the address stored in the terminal means 16 shown in Fig. 5 or 6 is different from the address written by the sender, the transfer destination address collated by the terminal means 16 shown in Fig. 5 or 6 is printed. When the transfer destination address is represented by the barcode, the transfer destination address is printed according to the barcode. A mail matter or a home delivery parcel whereon the printed transfer destination is stuck is transferred using the transfer destination address. In the present invention, a document whereon the transfer destination address is written enclosed in an envelope may be mailed to notify the sender of a guidance of a change in a transfer destination instead of mailing a postal card. In the present invention, when the transportation company uses the POS system, the computer means 1 shown in Fig. 5 or 6 can be accessed from the POS system once in one day to update changed information. Further, in the present invention, the changed information may be sent to the POS system once in one day by the computer means 1 shown in Fig. 5 or 6 to update information.

The transfer processing system and the transfer processing method according to the present invention can easily obtain a change such as a transfer from a division or a change of a post in a company and hence the transfer processing system and the transfer processing method according to the present invention may also be used for creating a calling card in response to a request. A calling card whereon a communication destination such as a name, an address or an enterprise name, or a barcode representing the permanent address is printed may also be used. In the present invention, a calling card having an IC chip and a delivery slip of a home delivery parcel may be used in addition to the barcode. In the present invention, the reading means capable of reading information from the barcode and the IC chip and sending information to the computer means or the terminal means can be used.

Further, in the present invention, the computer means or the terminal means comprising a storage medium whereon a program readable by a computer which converts the information read from a received barcode or an IC chip into characters and symbols capable of being collated can further be used. In the present invention, changed information obtained by the collation means can be output as a barcode and the output can be printed to create a calling card or the changed information can be entered to an IC chip. In this case, any known equipment may be used so far as being capable of outputting changed information collated and obtained by the computer means or the terminal means and of printing the output to create a calling card. Still further, any known equipment may be used so far as being capable of inputting changed information from the computer means or the terminal means to an IC chip.

In the present invention, a new IC chip whereto changed information has been entered may be created and applied on a calling card or a delivery slip. Further, information can be registered or changed by a person himself/herself and also by any family member of the person.

The contents of a telephone call or an e-mail may also be transferred by using the transfer processing system and the transfer processing method according to the present invention. For example, when the contents of a telephone call are desired to be transferred, make a telephone call to a company having the computer means used for the transfer processing system according to the present invention. The company having the computer means records the contents in a recordable medium together with obtaining information such as a telephone number or a name of a person to whom the contents are to be sent. The telephone number, the name and the like are collated from the obtained information and a telephone number of a selected transfer destination is called to send the recorded contents. In the present invention, the selected telephone number may also be provided to the calling person after making an inquiry to the calling person. Further, when the contents of an e-mail are transferred, an internet connection company sends the contents of the e-mail to the company having the computer means, obtains an e-mail address of a transfer destination, and transfer the contents of the e-mail to the transfer destination e-mail address. The transfer destination e-mail address can be provided to the sender in the same manner as that described above.

### Industrial applicability

Therefore, the present invention can provide the transfer processing system and the transfer processing method according to the present invention capable of transferring a mail matter or a home delivery parcel by using transfer destination information even when delivery destination information is changed by moving away or career change thereby reducing a time period and a cost required for transfer processing and providing the information to a person without knowing the transfer destination address. The present invention further provides a storage medium wherein a program readable by a computer for executing the transfer processing method is stored.

By the virtue of the present invention, an individual person need not announce that he/she has moved away or changes his/her career. Further, for a mail office or a transportation company, a time period or a cost for transferring a mail matter or a home delivery parcel are not necessary. For an enterprise, information such as office relocation, changing a post of an employee and transferring an employee from a division within the enterprise can be made possible to be sent thereby reducing work and a cost for re-sending a distributed mail matter or a distributed home delivery parcel to another company.

### (Numerals)

- 1:: Computer means
- 2:: Storage means
- 3:: User
- 4a, 4b:: Telephone sets or facsimile machines
- 5:: Operator
- 6:: Network
- 7:: Input means
- 8:: Searching means
- 9:: Means for registering information as searched delivery destination information
- 10:: New registration means
- 11:: Reading means
- 12:: Collation means
- 13:: Transfer destination selection means
- 14:: Display means
- 15:: Input screen
- 16:: Terminal means
- 17:: Printing means
- 18:: Database server
- 19:: Collation means
- 20:: Judgment means
- 21:: Means for registering information after having been subjected to comparison into terminal means
- 22:: Means for registering changed information into terminal means
- 23:: Means for newly registering new registration information as delivery destination information
- 24:: Display screen
- 25:: Selected data

## Claims

1. A transfer processing system comprising a computer means for retaining delivery destination information, entered changed information and new registration information which selects a transfer destination in relation to said delivery destination information retained in said computer means, said computer means comprising:
means for storing said delivery destination information;
means for searching delivery destination information to be changed according to said stored delivery destination information;
means for registering said searched delivery destination information entered after having been changed into said changed information as searched said delivery destination information; and
means for newly registering said newly registration information as said delivery destination information.

2. The transfer processing system according to claim 1, wherein said computer means further comprises:
means for collating obtained information obtained from a reading means for reading said delivery destination information from a sender with said stored delivery destination information; and
means for selecting a transfer destination in relation to said delivery destination information retained by said collation means.

3. The transfer processing system according to claim 1, wherein said delivery destination information contains an addressee name and an address.

4. The transfer processing system according to claim 2, wherein said reading means reads said obtained information from a barcode.

5. The transfer processing system according to claim 2, wherein said computer means receives said obtained information via a network.

6. The transfer processing system according to claim 5, wherein said computer means is connected to said network, and receives said changed information or said newly registration information from an input means connected to said network.

7. The transfer processing system according to claim 2, wherein said collation means provides a delivery destination of a distribution matter as an output of said collation means to a manager of said distribution matter from said sender.

8. The transfer processing system according to claim 2, wherein said transfer destination selection means outputs a selected transfer destination information as a barcode.

9. The transfer processing system according to claim 2, comprising a terminal means, said terminal means comprising:
said reading means;
said collation means; and
said transfer destination selection means.

10. The transfer processing system according to claim 9, wherein said terminal means contains at least said delivery destination information which can be updated by said changed information.

11. The transfer processing system according to claim 9, wherein said computer means comprises:
a means for collating said delivery destination information contained in said terminal means with said changed information;
a means for judging whether said changed information matches said delivery destination information contained in said terminal means;
when said changed information matches said delivery destination information contained in said terminal means, a means for registering said changed information into said terminal means followed by comparison to said delivery destination information contained in said terminal means;
when said changed information does not match said delivery destination information contained in said terminal means, a means for registering said changed information as delivery destination information contained in said terminal means into said terminal means; and
a means for registering said new registration information as delivery destination information contained in said terminal means.

12. A transfer processing method comprising a computer means for retaining delivery destination information, entered changed information and new registration information which selects a transfer destination in relation to said delivery destination information retained in said computer means, said transfer processing method further comprising steps of:
storing said delivery destination information;
searching delivery destination information to be changed from said stored delivery destination information;
registering said searched delivery destination information entered after having been changed into said changed information as searched said delivery destination information;
newly registering said new registration information as said delivery destination information;
collating obtained information obtained from a reading means for reading delivery destination information from a sender with said retained delivery destination information; and
selecting a transfer destination in relation to said delivery destination information retained by said collation step.

13. The transfer processing method according to claim 12, wherein said delivery destination information contains an addressee name and an address.

14. The transfer processing method according to claim 12, wherein said reading means reads said obtained information from a barcode.

15. The transfer processing method according to claim 12, comprising a step of receiving said obtained information via a network by said computer means.

16. The transfer processing method according to claim 12, comprising a step of receiving said changed information or said new registration information from said input means connected to a network.

17. The transfer processing method according to claim 12, wherein said collation step comprises a step of providing a delivery destination of a distribution matter to a manager of said distribution matter from said sender as an output of said collation means.

18. The transfer processing method according to claim 12, further comprising a step of outputting a delivery destination of a distribution matter to a 'manager of said distribution matter from said sender.

19. The transfer processing method according to claim 12, further comprising a step of outputting said transfer destination information selected in said selection step as a barcode.

20. The transfer processing method according to claim 12, wherein said collation step and said selection step are executed by a terminal means, said collation step and said selection step further comprising steps of:
collating said delivery destination information contained in said terminal means with said changed information;
judging whether said changed information matches said delivery destination information contained in said terminal means;
when said changed information matches said delivery destination information contained in said terminal means, registering said changed information after having been compared with said delivery destination information contained in said terminal means into said terminal means;
when said changed information does not match said delivery destination information
contained in said terminal means, registering said changed information as delivery
destination information contained in said terminal means; and
registering said new registration information as delivery destination information
contained in said terminal means.

21. A storage medium readable by a computer retaining delivery destination information and comprising a computer means for retaining entered changed information and entered new registration information, wherein
a program readable by a computer for executing a transfer processing method for selecting a transfer destination in relation to delivery destination information contained in said computer means is stored, said program makes a computer execute steps of:
storing said delivery destination information;
searching delivery destination information to be changed from said stored delivery destination information;
registering said searched delivery destination information entered after having been changed into said changed information as searched said delivery destination information;
newly registering said new registration information as said delivery destination information;
collating obtained information obtained from a reading means for reading delivery destination information from a sender with said retained delivery destination information; and
selecting a transfer destination in relation to said delivery destination information retained by said collation step.

22. The storage medium according to claim 21, wherein said delivery destination information contains an addressee name and an address.

23. The storage medium according to claim 21, wherein said reading means reads said obtained information from a barcode.

24. The storage medium according to claim 21, comprising a step of receiving said obtained information via a network by said computer means.

25. The storage medium according to claim 21, comprising a step of receiving said changed information or said new registration information from an input means connected to a network.

26. The storage medium according to claim 21, wherein said collation step comprises a step of providing a delivery destination of a distribution matter as an output of said collation means to a manager of said parcel from said sender.

27. The storage medium according to claim 21, further comprising a step of providing a delivery destination of a distribution matter as an output of said collation means to a manager of said parcel from said sender.

28. The storage medium according to claim 21, further comprising a step of outputting a transfer destination information selected by said selection step as a barcode.

29. The storage medium according to claim 21, wherein said collation step and said selection step are executed by a terminal means, said storage medium further executing steps of:
collating said delivery destination information contained in said terminal means with said changed information;
judging whether said changed information matches said delivery destination information contained in said terminal means;
when said changed information matches said delivery destination information contained in said terminal means, comparing said delivery destination information with said changed information and then registering said changed information into said terminal;
when said changed information does not match said delivery destination information contained in said terminal means, registering said changed information as delivery destination information contained in said terminal means into said terminal means; and
registering said new registration information as delivery destination information contained in said terminal means.
